# EUROPEAN PATENT APPLICATION

(11) **EP 2 365 484 A1**
(43) Date of publication of application: **14.09.2011**
(21) Application number: 09823444.6
(22) Date of filing: 01.10.2009
(51) Int. Cl.: G11B 7/007, G11B 7/085, G11B 7/24

(54) **OPTICAL INFORMATION RECORDING MEDIUM, OPTICAL INFORMATION RECORDING/REPRODUCTION DEVICE, CONTROL METHOD THEREOF, OPTICAL INFORMATION RECORDING/REPRODUCTION PROGRAM, AND COMPUTER-READABLE RECORDING MEDIUM**

(30) Priority: 31.10.2008 JP 2008282492; 27.02.2009 JP 2009047123
(71) Applicant: Sharp Kabushiki Kaisha, Osaka-shi, Osaka 545-8522 (JP)
(72) Inventor: ADACHI, Yoshihisa, Osaka 545-8522 (JP); MAEDA, Shigemi, Osaka 545-8522 (JP); TAJIMA, Hideharu, Osaka 545-8522 (JP); NAKANO, Ikuo, Osaka 545-8522 (JP); OKUMURA, Tetsuya, Osaka 545-8522 (JP); ARIMOTO, Takashi, Osaka 545-8522 (JP); IWATA, Noboru, Osaka 545-8522 (JP); Hayashi, Tetsuya, Osaka 545-8522 (JP); ETOH, Atsushi, Osaka 545-8522 (JP)
(74) Representative: Müller - Hoffmann & Partner
(86) International application number: PCT/JP2009/067183
(87) International publication number: WO 2010/050331

(57) **Abstract**

The present invention provides an optical information recording medium (2) capable of shortening a time from acquiring identification information to starting a program etc. recorded on an ROM layer. The optical information recording medium (2) includes two or more information recording layers, information of each of the two or more information recording layers is readable by emitting reproducing light thereto, at least one of said two or more information recording layers is an RE/R layer (4), at least another one of said two or more information recording layers is an ROM layer (5), and the RE/R layer (4) includes an identification information recording region (41), and an interlayer-movement Flag is recorded on the identification information recording region (41).

## Description

### Technical Field

The present invention relates to an optical information recording medium, an optical information recording and reproducing device, a method for controlling the device, an optical information recording and reproducing program, and a computer-readable storage medium. To be specific, the present invention relates to a multilayered optical information recording medium etc. including two or more information recording layers at least one of which is an information recording layer having a recording property different from that of one or more remaining information recording layers.

### Background Art

Recently, there has been requested an increase in the recording capacity of an optical information recording medium in order to deal with a huge amount of information such as images.

One possible way to increase the recording capacity of an optical information recording medium is designing an optical information recording medium to have plural information recording layers. For example, as of now, multilayered optical information recording media having two information recording layers, such as DVD (Digital Versatile Disc) and BD (Blu-ray Disc©), have been standardized and sold.

In a multilayered optical information recording medium including two or more information recording layers, in order to reproduce information recorded on an information recording layer farther from a side where reproducing light is incident, it is necessary to cause an information recording layer closer to the side where reproducing light is incident to transmit the reproducing light. This requires setting the information recording layer closer to the side where reproducing light is incident to have low reflectance. Further, multilayering results in low intensity of light returning from the information recording layer farther from a side where reproducing light is incident.

Due to these problems, designing an optical information recording medium to have a plurality of rewritable information recording layers is difficult, and the number of rewritable information recording layers which can be included in an optical information recording medium is limited to two at present.

In order to deal with these problems, recently, there has been requested an optical information recording medium including not only a rewritable information recording layer but also a read-only information recording layer or a recordable information recording layer on which various contents are recorded in order to increase the recording capacity (hereinafter referred to as "hybrid optical information recording medium").

Hereinafter, the rewritable information recording layer is referred to as an RE (RE-writable) layer, the read-only information recording layer is referred to as an ROM (Read Only Memory) layer, and the recordable information recording layer is referred to as an R (Recordable) layer.

As an example of a conventional art relating to such hybrid optical information recording media, Patent Literature 1 discloses an optical disc having two or more layers in which a layer with a predetermined distance or more from a plane where reproducing light is incident is an RE layer and a layer with less than the predetermined distance from the plane is an ROM layer.

This structure of the optical disc of Patent Literature 1 prevents coexistence of a recorded state and a non-recorded state in the RE layer from having an adverse influence on reproduction of the ROM layer.

In a case of an optical information recording and reproducing device for recording/reproducing information on/from a hybrid optical information recording medium, it is necessary to determine how many information recording layers the optical information recording medium includes and what recording property each information recording layer has. As information indicative of such a structure of the optical information recording medium, identification information is employed.

Non-patent Literature 1 describes that currently commercially available BD discs are designed such that identification information is provided at a layer positioned farthest from a plane where reproducing light is incident.

### Citation List

### [Patent Literature]

Japanese Patent Application Publication Tokukai No. 2002-304730 (published on October 18, 2002)

### [Non-patent Literature]

"Blu-ray disc dokuhon (book)", edited by OGAWA Hiroshi and TANAKA Shinichi, Ohmsha, published on December 10, 2006, p.161-162

### Summary of Invention

### Technical Problem

However, in a case where the conventional hybrid optical information recording medium is designed such that identification information is provided at a layer farthest from a plane where reproducing light is incident, e.g. in a case where the conventional hybrid optical information recording medium is the optical disc disclosed in Patent Literature 1 in which a layer farther from a plane where reproducing light is incident is an RE layer and a layer closer to the plane is an RE layer, it is necessary to access identification information provided at the RE layer farther from the plane.

In this case, when a software program etc. for causing an optical information recording and reproducing device to operate is recorded on the ROM layer, it is necessary to initially read identification information on the RE layer and access a user region on the same RE layer and then access the ROM layer. This raises a problem that it takes a long time from reading the identification information to starting the software program.

In a case of starting the software program (e.g. OS, Operating System) for causing the optical information recording and reproducing device to operate, it is general to read information on the ROM layer immediately after reading the identification information. The reason is as follows.

Initially, information recorded on the ROM layer is information to be used without any change when using an optical information recording medium including the ROM layer. That is, the information recorded on the ROM layer is information to be always accessed.

For example, in a case where a software program for causing the optical information recording and reproducing device to operate is recorded on the ROM layer, it is preferable to put a higher priority on reproducing information from the ROM layer than recording on the RE layer.

The present invention was made in view of the foregoing problems. An object of the present invention is to provide an optical information recording medium etc. which allows shortening a time from acquiring identification information to starting a program recorded on an ROM layer.

### Solution to Problem

In order to solve the foregoing problem, an optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, and interlayer-movement permission information indicative of permission for a light spot of the reproducing light to make interlayer-movement from the identification information recording region of the first information recording layer to the second information recording layer being recorded on the identification information recording region.

With the arrangement, the optical information recording medium includes two or more information recording layers, from each of which information is readable by emitting reproducing light thereto.

The term "information recording layer" includes an information recording region or an information recording plane where information is recorded, and indicates a single film or multilayered film made of a reflective film, recording film etc. having a specific recording property, or a predetermined range in a medium surface direction (in-plane direction of a plane where reproducing light is incident) at an interface between two layers.

Examples of the information recorded on the optical information recording medium of the present invention include information already recorded on the optical information recording medium in shipping, information recorded by a user on the optical information recording medium after shipping, and information recorded by the operation of an optical information recording and reproducing device (which will be mentioned later) on the optical information recording medium after shipping.

Further, in the optical information recording medium, at least one layer is a first information recording layer where information is rewritable or information is only additionally recordable (hereinafter merely referred to as "RE layer or R layer").

Further, at least another one layer is a second information recording layer (hereinafter merely referred to as "ROM layer").

That is, the optical information recording medium is a so-called hybrid optical information recording medium in which information recording layers with different recording properties, such as ROM, RE, and R layers, are layered.

The wording "information is only additionally recordable" indicates that information is readable but information is only additionally recordable.

Further, with the arrangement, the RE layer or the R layer includes an identification information recording region where identification information indicative of the structure of the optical information recording medium is recorded in advance.

It is necessary for the optical information recording and reproducing device of the present invention (which will be explained below) to specify how many information recording layers the optical information recording medium consists of and what recording property each information recording layer has. The "identification information" is information indicative of such a structure of the optical information recording medium.

Further, with the arrangement, interlayer-movement permission information indicative of permission for the light spot of the reproducing light to make interlayer-movement from the identification information recording region of the RE layer or R layer to the ROM layer is recorded on the identification information recording region.

As for the "interlayer-movement permission information indicative of permission for the light spot of the reproducing light to make interlayer-movement", interlayer-movement may be made immediately after recognizing the interlayer-movement permission information, or interlayer-movement may be made not immediately after recognizing the interlayer-movement permission information. That is, the interlayer-movement permission information is information for enabling the optical information recording and reproducing device to recognize that the interlayer-movement is permitted or not permitted, and the interlayer-movement may be made at any time point as long as the time point is between recognition of the interlayer-movement permission information and completion of reading all information recorded on the identification information recording region.

A recording position of the "interlayer-movement permission information" is not particularly limited as long as the recording position is between an information recording start position and an information recording end position of the identification information recording region. In a case where the "interlayer-movement permission information" is recorded at the information recording end position of the identification information recording region, interlayer-movement is made after all the information recorded on the identification information recording region is read and right after the interlayer-movement permission information is recognized.

Therefore, by designing the optical information recording and reproducing device such that, for example, recognition of interlayer-movement permission information while reading the identification information recorded in advance on the identification information recording region of the RE layer or R layer urges the optical information recording and reproducing device to make the interlayer-movement of a light spot in a predetermined manner at a time when the structure of the optical information recording medium of the present invention is specified by reading the identification information, it is possible for the optical information recording and reproducing device to move the light spot to the ROM layer without t moving the light spot in the same RE layer or R layer after acquiring the identification information and specifying the structure of the optical information recording medium, thereby reading information recorded on the ROM layer (e.g. program such as software).

This enables shortening a time from acquiring identification information to starting a program etc. recorded on the ROM layer.

In order to solve the foregoing problem, an optical information recording and reproducing device of the present invention is an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, the optical information recording and reproducing device comprising: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the identification information recording region of the first information recording layer to the second information recording layer; and reproduction control means for reproducing information recorded in advance on the second information recording layer.

In order to solve the foregoing problem, a method of the present invention for controlling an optical information recording and reproducing device is a method for controlling an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, the method comprising the steps of: (i) reproducing the identification information from the identification information recording region; (ii) when a structure of the optical information recording medium is specified based on the identification information reproduced in the step (i), causing a light spot of the reproducing light to make interlayer-movement from the identification information recording region of the first information recording layer to the second information recording layer; and (iii) reproducing information recorded in advance on the second information recording layer.

The optical information recording and reproducing device as above and the method as above include the identification information reproduction control means for reproducing the identification information from the identification information recording region and the step (i) of reproducing the identification information from the identification information recording region, respectively. This enables acquiring identification information, enabling to specify the structure of the optical information recording medium.

Further, the optical information recording and reproducing device as above and the method as above include the interlayer-movement control means for, when a structure of the optical information recording medium is specified based on the identification information reproduced by the identification information reproduction control means, causing the light spot of the reproducing light to make interlayer-movement and the step (ii) of, when a structure of the optical information recording medium is specified based on the identification information reproduced in the step (i), causing the light spot of the reproducing light to make interlayer-movement, respectively.

This enables causing the light spot to make interlayer-movement when the structure of the optical information recording medium is specified based on the identification information.

Further, the optical information recording and reproducing device as above and the method as above include the reproduction control means for reproducing information recorded in advance on the ROM layer and the step (iii) of reproducing information recorded in advance on the ROM layer, respectively.

Accordingly, at a time when the structure of the optical information recording medium of the present invention is specified by reading the identification information recorded in advance on the identification information recording region of the RE layer or R layer, it is possible to make the interlayer-movement in a predetermined manner and to reproduce information recorded in advance on the ROM layer. Consequently, it is possible to move the light spot to the ROM layer without moving the light spot in the same RE layer or R layer after acquiring the identification information and specifying the structure of the optical information recording medium, thereby reading information recorded on the ROM layer (e.g. program such as software).

This enables shortening a time from acquiring identification information to starting a program etc. recorded on the ROM layer.

An optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, and the first information recording layer and the second information recording layer being designed such that reading the identification information by emitting the reproducing light enables a light spot of the reproducing light to make interlayer-movement from the first information recording layer to the second information recording layer.

With the arrangement, when the identification information is recorded in advance on the identification information recording region of the first information recording layer, it is recognized that interlayer-movement of the light spot of the reproducing light from the identification information recording region of the first information recording layer to the second information recording layer is permitted.

Consequently, the optical information recording and reproducing device can make the interlayer-movement in a predetermined manner at a time when the structure of the optical information recording medium is specified while reading the identification information recorded in advance on the identification information recording region of the first information recording layer. Therefore, it is possible for the optical information recording and reproducing device to move the light spot to the second information recording layer without moving the light spot in the same first information recording layer after acquiring the identification information and specifying the structure of the optical information recording medium, thereby reading information recorded on the second information recording layer (e.g. program such as software).

This enables shortening a time from acquiring identification information to starting a program etc. recorded on the second information recording layer.

An optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance and a management information recording region where management information for managing recordation of information on and/or reproduction of information from the first information recording layer is recorded in advance, and interlayer-movement permission information indicative of permission for a light spot of the reproducing light to make interlayer-movement from the identification information recording region of the first information recording layer to the second information recording layer being further recorded on the management information recording region.

With the arrangement, the interlayer-movement permission information is recorded on the management information recording region in order that interlayer-movement of the light spot of the reproducing light is made from the identification information recording region of the first information recording layer to the second information recording layer before a user starts recordation of information on the first information recording layer.

Consequently, with the arrangement, information recorded in advance on the second information recording layer is reproduced before a user records information on the first information recording layer. This enables shortening a time from acquiring identification information to starting a program etc. recorded on the second information recording layer.

An optical information recording and reproducing device of the present invention is an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the optical information recording and reproducing device including: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the management information recording region of the first information recording layer to the second information recording layer; and reproduction control means for reproducing information recorded in advance on the second information recording layer.

A method of the present invention for controlling an optical information recording and reproducing device is a method for controlling an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the method including the steps of: (i) reproducing the identification information from the identification information recording region; (ii) when a structure of the optical information recording medium is specified based on the identification information reproduced in the step (i), causing a light spot of the reproducing light to make interlayer-movement from the management t information recording region of the first information recording layer to the second information recording layer; and (iii) reproducing information recorded in advance on the second information recording layer.

With the optical information recording and reproducing device as above and the method as above, at a time when management information recorded in advance on the management information recording region of the first information recording layer of the optical information recording medium is read and management information for managing recordation and reproduction of information on and from the optical is acquired, the interlayer-movement is made in a predetermined manner so that information recorded in advance on the second information recording layer is reproduced. This enables moving the light spot to the second information recording layer and reading information (e.g. program such as software) recorded on the second information recording layer, before a user starts recordation of information on the first information recording layer.

This enables shortening a time from acquiring identification information to starting a program etc. recorded on the second information recording layer.

### Advantageous Effects of Invention

As described above, the optical information recording medium of the present invention is designed such that interlayer-movement permission information indicative of permission for a light spot of the reproducing light to make interlayer-movement from the identification information recording region of the first information recording layer to the second information recording layer being recorded on the identification information recording region.

Further, the optical information recording and reproducing device of the present invention includes: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the identification information recording region of the first information recording layer to the second information recording layer; and reproduction control means for reproducing information recorded in advance on the second information recording layer.

Further, the method of the present invention for controlling an optical information recording and reproducing device includes the steps of: (i) reproducing the identification information from the identification information recording region; (ii) when a structure of the optical information recording medium is specified based on the identification information reproduced in the step (i), causing a light spot of the reproducing light to make interlayer-movement from the identification information recording region of the first information recording layer to the second information recording layer; and (iii) reproducing information recorded in advance on the second information recording layer.

This enables shortening a time from acquiring identification information to starting a program etc. recorded on the ROM layer.

### Brief Description of Drawings

Fig. 1

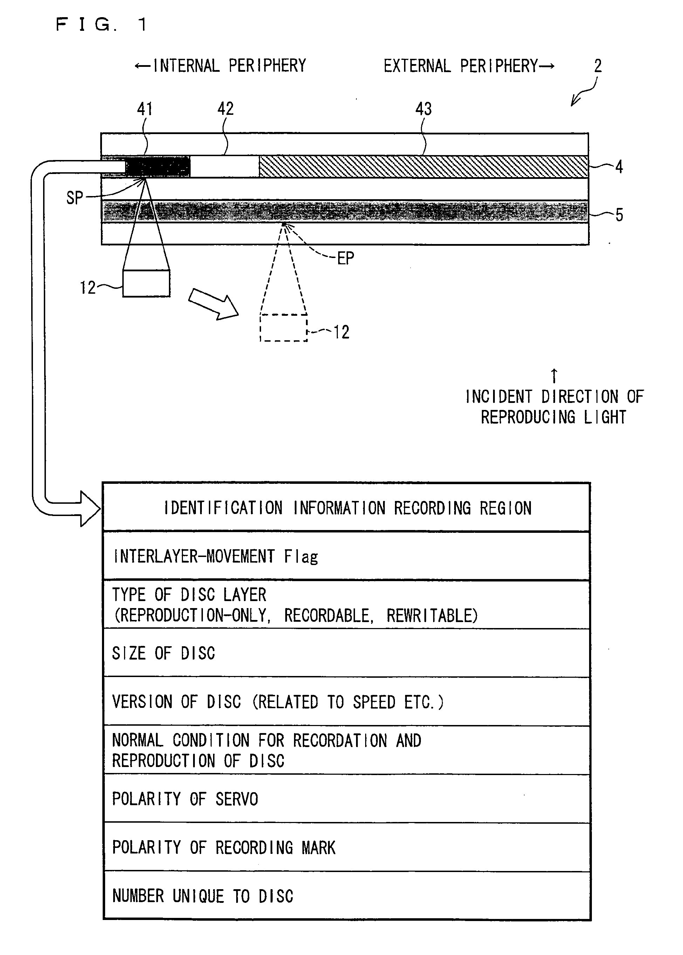

   Fig. 1 is a drawing schematically showing one embodiment of an optical information recording medium of the present invention.
Fig. 2

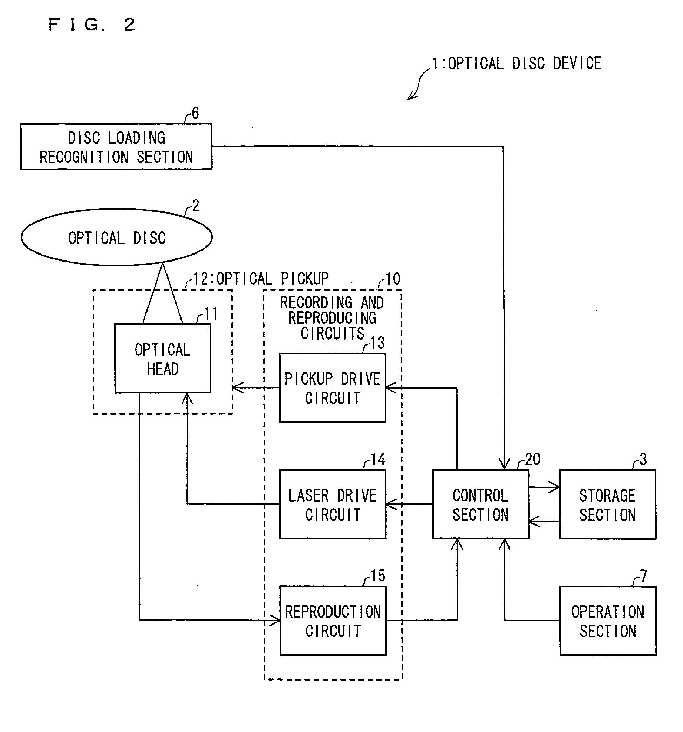

   Fig. 2 is a block diagram showing one embodiment t of an optical information recording medium of the present invention.
Fig. 3

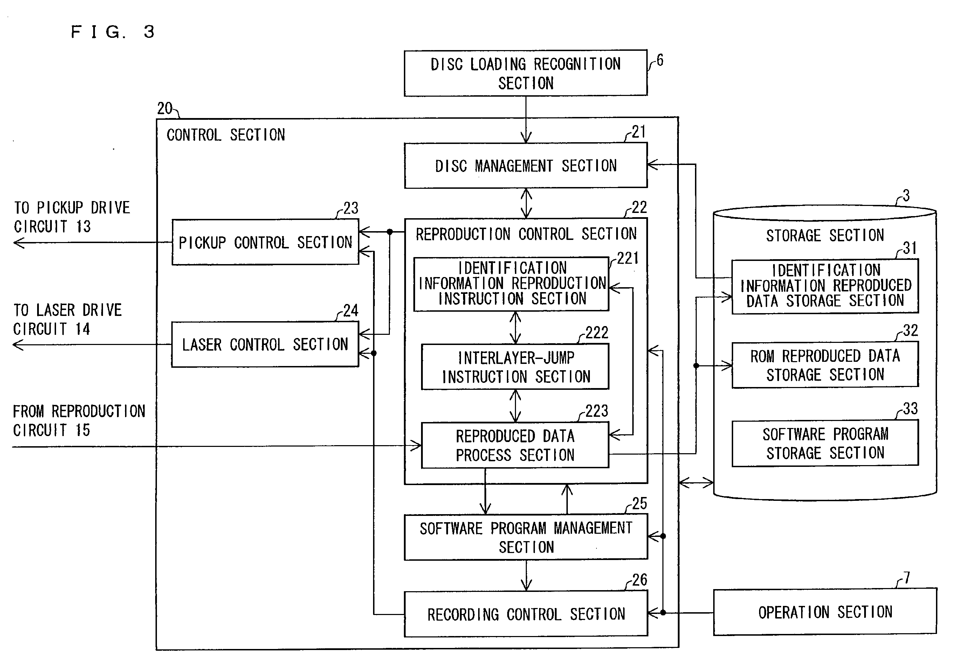

   Fig. 3 is a block diagram showing a structure of a main part of the optical information recording and reproducing device.
Fig. 4

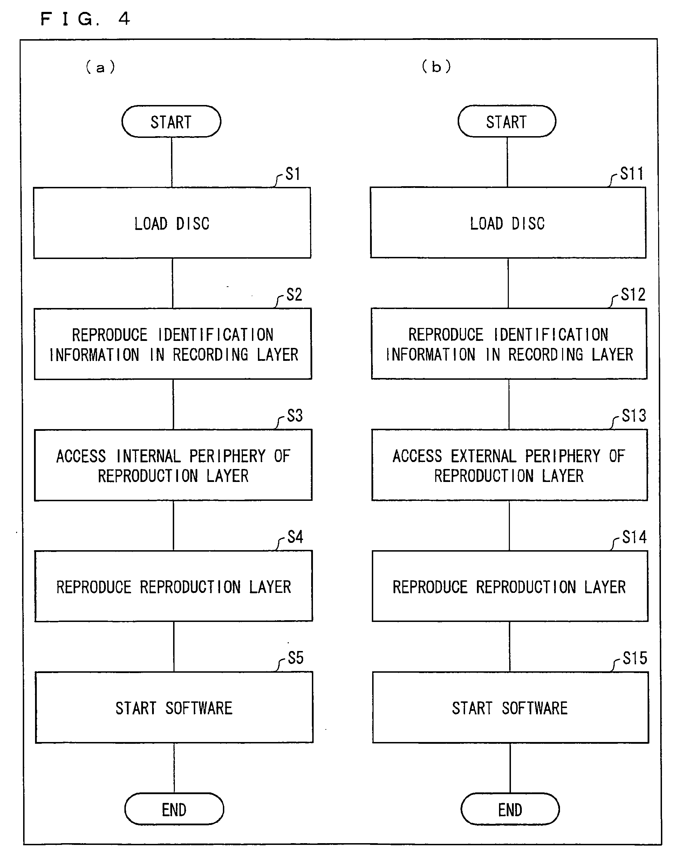

   Fig. 4 is a flowchart showing a procedure of an operation of the optical information recording and reproducing device. (a) shows an example of the operation of the optical information recording and reproducing device. (b) shows another example of the operation of the optical information recording and reproducing device.
Fig. 5

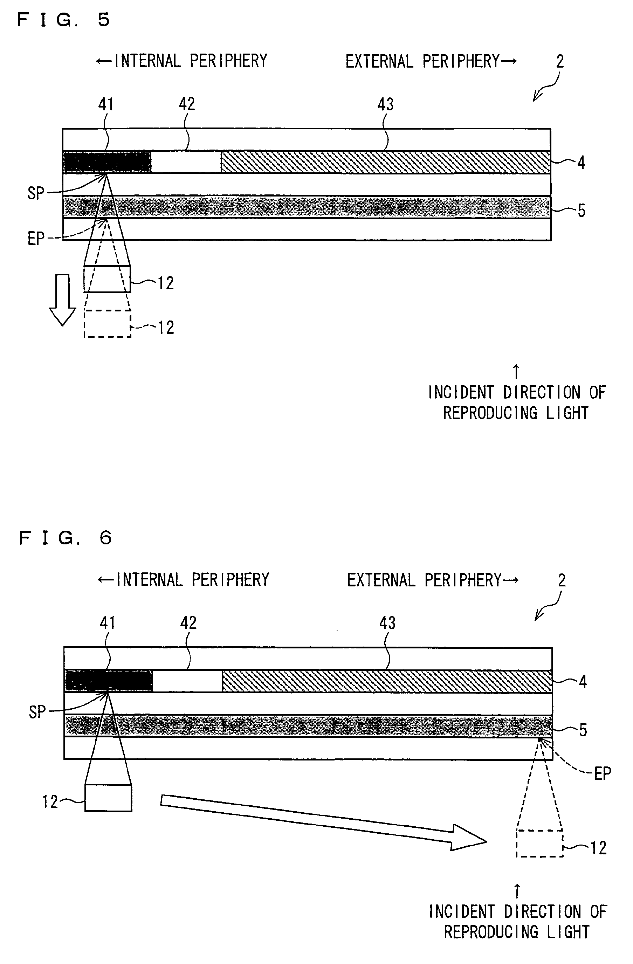

   Fig. 5 is a drawing schematically showing another embodiment of the optical information recording medium of the present invention.
Fig. 6
   Fig. 6 is a drawing schematically showing still another embodiment of the optical information recording medium of the present invention.
Fig. 7

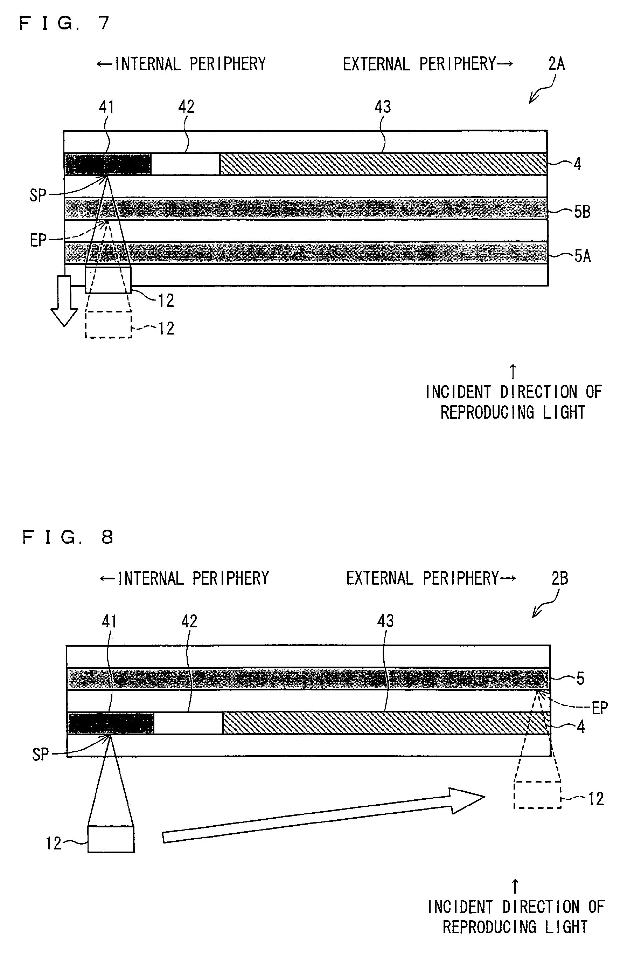

   Fig. 7 is a drawing schematically showing still another embodiment of the optical information recording medium of the present invention.
Fig. 8
   Fig. 8 is a drawing schematically showing still another embodiment of the optical information recording medium of the present invention.
Fig. 9

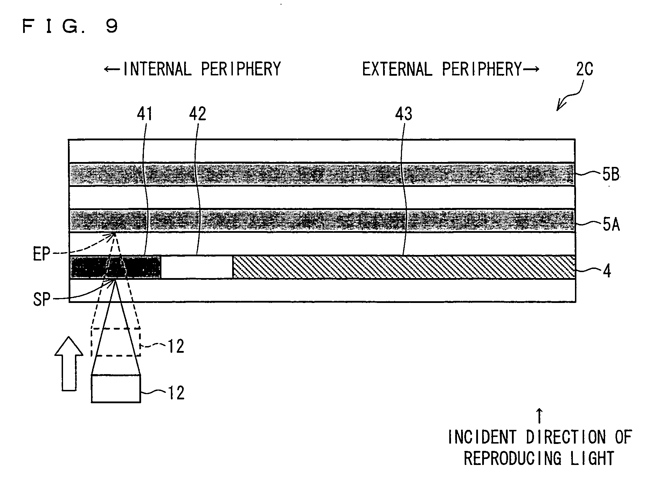

   Fig. 9 is a drawing schematically showing still another embodiment of the optical information recording medium of the present invention.
Fig. 10

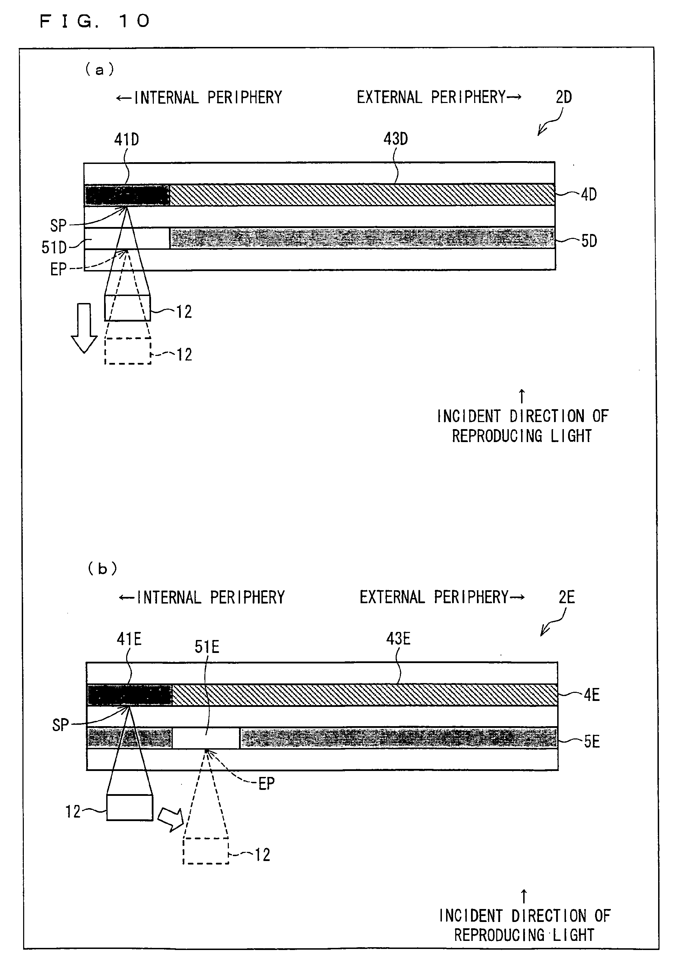

   Fig. 10 is a drawing schematically showing still another embodiment of the optical information recording medium of the present invention. (a) schematically shows still another embodiment of the optical information recording medium of the present invention. (b) schematically show still another embodiment of the optical information recording medium of the present t invention.
Fig. 11

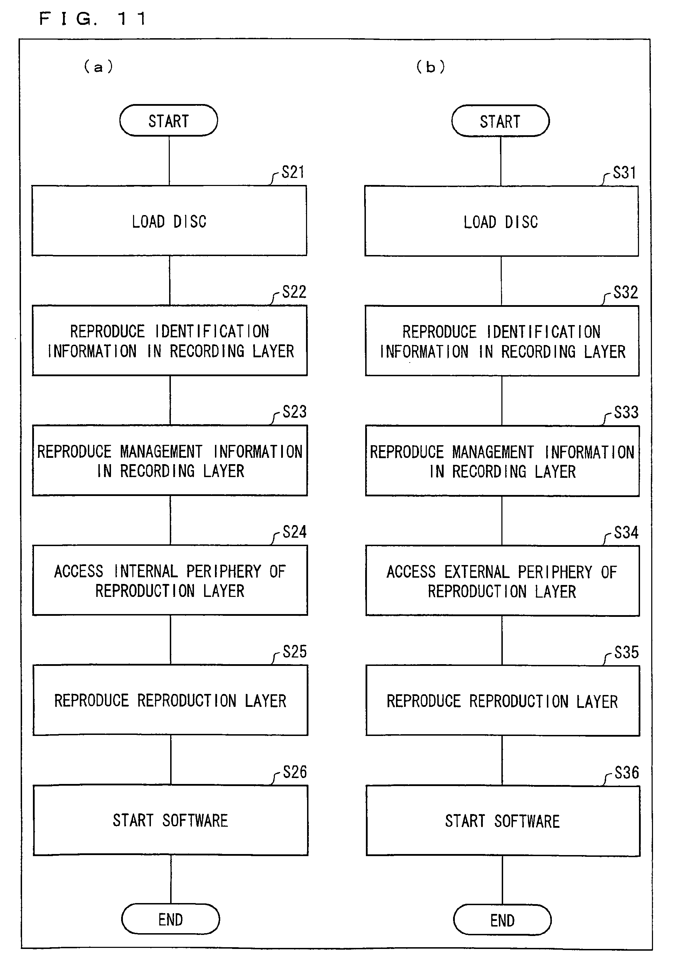

   Fig. 11 is a flowchart showing a procedure of an operation of the optical information recording and reproducing device. (a) shows still another example of the operation of the optical information recording and reproducing device. (b) shows still another example of the operation of the optical information recording and reproducing device.

### Description of Embodiments

The following explains embodiments of the present invention with reference to drawings.

### [Embodiment 1]

The following explains Embodiment 1 of the present invention with reference to Figs. 1-9.

### [1. Configuration of optical information recording medium]

Initially, with reference to Fig. 1, an explanation is made as to a configuration of an optical disc (optical information recording medium) 2 in accordance with Embodiment 1 of the present invention. Fig. 1 is a drawing schematically showing the optical disc 2 in accordance with the present embodiment.

As shown in Fig. 1, the optical disc 2 in accordance with the present embodiment includes at least an RE/R layer (first information recording layer) 4 and an ROM layer (second information recording layer) 5. Information on the respective information recording layers can be read out by radiating reproducing light to the information recording layers.

In the optical disc 2, the information recording layers are only two layers consisting of the RE/R layer 4 and the ROM layer 5. Alternatively, there may be three or more information recording layers. Further, the RE/R layer 4 may be any of an RE layer and an R layer.

In some cases, the ROM layer is designed such that information is recorded thereon by forming prepit sequences having concavities and convexities at an interface between different materials. As such, hereinafter, in the case of the ROM layer, an expression that information is recorded on an "information recording plane" may be used.

On the other hand, the RE layer or the R layer is designed such that information is recorded thereon by, for example, changing a physical property of an information recording region in a medium surface direction of an information recording layer. As such, in the case of the RE layer or R layer, an expression that information is recorded on an "information recording region" may be used.

That is, the term "information recording layer" includes an information recording region or an information recording plane where information is recorded, and indicates a single film or multilayered film made of a reflective film, recording film etc. having a specific recording property, or a predetermined range in a medium surface direction (in-plane direction of a plane where reproducing light is incident) at an interface between two layers.

Explanation of the "information recording layer" would be complicated if the explanation would be made for both cases where information is recorded on the "information recording plane" and where information is recorded on the "information recording region". As such, hereinafter, an explanation such as "information is recorded on the information recording layer" will be used.

Examples of the information recorded on the optical disc 2 include information already recorded on the optical disc 2 in shipping, information recorded by a user on the optical disc 2 after shipping, and information recorded by the operation of an optical disc device (optical information recording and reproducing device) 1 (which will be mentioned later) on the optical disc 2 after shipping.

The RE layer is a so-called rewritable information recording layer, and is an information recording layer where information is rewritable.

The R layer is a so-called recordable information recording layer, and is an information recording layer where information is only additionally recordable.

The ROM layer is a so-called read-only information recording layer, and is an information recording layer where information is readable only.

That is, the optical disc 2 is a so-called hybrid optical information recording medium in which information recording layers with different recording properties, such as ROM, RE, and R layers, are layered.

The wording "information is only additionally recordable" indicates that information is readable but information is only additionally recordable.

As shown in Fig. 1, the RE/R layer 4 includes an identification information recording region 41, a management information recording region 42, and a user recording region 43.

In the identification information recording region 41, various identification information indicative of a structure of the optical disc 2 is recorded in advance.

In the management information recording region 42, management information for managing recording/ reproducing information on/from the optical disc 2 is recorded in advance.

The user recording region 43 is a recording region where a user can record (or additionally record) desired information.

It is necessary for the optical disc device 1 to specify how many information recording layers the optical disc 2 consists of and what recording property each information recording layer has (this will be explained below). The "identification information" is information indicative of such a structure of the optical information recording medium. In the present embodiment, based on the identification information, the optical disc device 1 specifies (identifies) the optical information recording medium as having the RE/R layer 4 and the ROM layer 5 and having the identification information in the RE/R layer 4 etc.

Specific examples of the identification information include the type of a layer in a disc (Read-only, Recordable, Rewritable), the size of a disc, the version of a disc (which relates to speed etc.), standard conditions for recording/reproducing information on/from a disc, the polarity of a servo, the polarity of a recording mark, and the number unique to a disc, as shown in Fig. The order of recording of (the positioning of) these identification information on the identification information recording region 41 is not particularly limited. However, in general, the order of recording these identification information is determined by a standard etc.

In the optical disc 2 in accordance with the present embodiment, not only the normal identification information as above but also interlayer-movement Flag (interlayer-movement permission information) are recorded on the identification information recording region 41.

The interlayer-movement Flag is information indicating that interlayer-movement of a light spot of reproducing light from the identification information recording layer 41 in the RE/R layer 4 to the ROM layer 5 (hereinafter merely referred to as "interlayer-movement") is permitted or not permitted.

To be more specific, in a case where the interlayer-movement Flag is set to "0", the interlayer-movement Flag indicates that interlayer-movement of a light spot of reproducing light from the identification information recording layer 41 in the RE/R layer 4 to the ROM layer 5 is not permitted.

On the other hand, in a case where the interlayer-movement Flag is set to "1", the interlayer-movement Flag indicates that interlayer-movement is permitted.

In the case where the interlayer-movement Flag is set to "1", interlayer-movement may be made right after the optical disc device 1 recognizes the interlayer-movement Flag, or interlayer-movement may be made not necessarily right after the optical disc device 1 recognizes the interlayer-movement Flag. That is, the interlayer-movement Flag is information for enabling the optical disc device 1 to recognize that the interlayer-movement is permitted or not permitted, and the interlayer-movement may be made at any time point as long as the time point is between recognition of the interlayer-movement Flag set to "1" and completion of reading all information recorded on the identification information recording region 41.

A recording position of the interlayer-movement Flag is not particularly limited as long as the recording position is between an information recording start position and an information recording end position of the identification information recording region 41. In a case where the interlayer-movement Flag is recorded at the information recording end position of the identification information recording region 41, interlayer-movement is made after all the information recorded on the identification information recording region 41 1 is read and right after the interlayer-movement Flag set to "1" is recognized.

In the case where the interlayer-movement Flag is set to "0", a normal reproduction is made without interlayer-movement.

Setting the interlayer-movement Flag to "0" or "1" may be made by a user via an operation section 7 (which will be explained below) or may be made by a disc management section 21 (which will be explained below) when the optical disc 2 is loaded to the optical disc device 1 (which will be explained below).

Therefore, the optical disc device 1 which will be explained later should be designed such that in a case where the interlayer-movement Flag set to "1" is recognized while reading out identification information recorded in advance on the identification information recording region 41 in the RE/R layer 4, predetermined interlayer-movement is made at a time when the structure of the optical disc 2 can be specified by reading out the identification information. This enables moving the light spot to the ROM layer 5 without moving the light spot in the same RE/R layer 4 after acquiring the identification information and specifying the structure of the optical disc 2, thereby reading information (e.g. program such as software) recorded on the ROM layer 5.

Fig. 1 schematically shows the interlayer-movement as above, showing that interlayer-movement of a light spot of reproducing light from the optical pickup 12 is made from an interlayer-jump start position SP to an interlayer-jump end position EP.

The interlayer-jump start position SP may be a position on the identification information recording region 41 which position corresponds to a time point when the structure of the optical disc 2 is specified based on the identification information recorded in advance on the identification information recording region 41.

The interlayer-jump start position SP may be the right end position on the identification information recording region 41 in a case where identification information is read from the internal peripheral side (left side of the drawing) to the outer peripheral side (right side of the drawing). The right end position corresponds to a time point when all the identification information is read, provided that the identification information recording region 41 does not have a blank region.

The interlayer-jump start position SP may be any position as long as it is between the two positions.

On the other hand, the interlayer-jump end position EP may be any position as long as it is on the information recording plane of the ROM layer 5. However, in consideration of shortening a time from acquiring identification information to starting a program etc. recorded on the ROM layer 5, it is preferable that the interlayer-jump end position EP is at an internal peripheral end of the information recording plane or at an outer peripheral end of the information recording plane.

As described above, the optical disc 2 enables shortening a time from acquiring the identification information to starting the program etc. recorded on the ROM layer 5.

### [2. Configuration of optical information recording and reproducing device]

With reference to Figs. 2 and 3, the following explains a configuration of the optical disc device (optical information recording and reproducing device) 1 in accordance with Embodiment 1 of the present invention. Configurations other than the configuration explained in [2. Configuration of optical information recording and reproducing device] are the same as those in [1 . Configuration of optical information recording medium]. For convenience of explanation, members having the same functions as those shown in the drawing in [1. Configuration of optical information recording medium] are given the same reference numerals and explanations thereof are omitted here.

Fig. 2 is a block diagram schematically showing a configuration of the optical disc device 1 in accordance with the present embodiment.

As shown in Fig. 2, the optical disc device 1 mainly includes a storage section 3, a disc loading recognition section 6, recording and reproducing circuits 10, an optical head 11, an optical pickup 12, and a control section 20.

Further, the recording and reproducing circuits 10 mainly include a pickup drive circuit 13, a laser drive circuit 14, and a reproduction circuit 15.

Further, the optical disc device 1 records/reproduces information on/from an optical information recording medium including the optical disc 2, such as DVD and BD.

As shown in Fig. 2, in the optical disc device 1, the control section 20 controls, via the pickup drive circuit 13, the optical pickup 12 so that the optical pickup 12 moves toward a track (not shown) of the rotating optical disc 2.

The optical pickup 12 includes the optical head 11. The control section 20 sets recording conditions via the laser drive circuit 14 and causes the optical head 11 to radiate recording laser beam to a recording region of the optical disc 2, thereby recording information on a track of the optical disc 2.

Further, in the optical disc device 1, the control section 20 controls, via the pickup drive circuit 13, the optical pickup 12 so that the optical pickup 12 moves toward the recording region of the optical disc 2. Then, the control section 20 causes, via the laser drive circuit 14, the optical head 11 to radiate reproducing laser beam to the optical disc 2.

Reflective light detected by the optical head 11 is converted by the reproducing circuit 15 into a reproduction signal and is input to the control section 20. Thus, the optical disc device 1 reproduces information recorded on the track of the optical disc 2.

Further, the optical disc device 1 includes the disc loading recognition section 6. The disc loading recognition section 6 detects loading of the optical disc 2, and may be any sensor as long as it can detect loading of the optical disc 2.

Further, the disc loading recognition section 6 outputs the detected result as a detection signal to the control section 20.

The operation section 7 is a section via which a user enters operation instructions to the optical disc device 1. Examples of the operation section 7 include operation buttons and their interface.

With reference to Fig. 3, the following details main parts (e.g. control section 20) of the optical disc device 1. Fig. 3 is a block diagram showing main parts of the optical disc device 1.

As shown in Fig. 3, the storage section 3 is a storage section in which information such as a program and data is stored beforehand or to be stored. The storage section 3 is preferably made of a RAM (Random Access Memory), and may include a ROM as well.

Further, the storage section 3 mainly includes an identification information reproduced data storage section 31, an ROM reproduced data storage section 32, and a software program storage section 33. Needless to say, information other than information to be stored in these storage sections may be stored in the storage section 3.

For example, as explained below, information used to generate the interlayer-movement Flag and cause the interlayer-movement Flag to be recorded in an optical information recording medium without the interlayer-movement t Flag, information used to set the interlayer-movement Flag to "0" or "1", and information such as a predetermined interlayer-movement jump start position SP and a predetermined interlayer-movement jump end position EP are also to be stored or stored beforehand in the storage section 3.

In the identification information reproduced data storage section 31, reproduced data of identification information recorded on the identification information recording region 41 of the RE/R layer 4 is stored.

In the ROM reproduced data storage section 32, a program which is record on the ROM layer 5 beforehand and which controls operation of the optical disc device 1 (e.g. OS: Operating System) and other various data are stored.

In the software program storage section 33, a program for causing the optical disc device 1 to operate is stored beforehand. Further, in the software program storage section 33a, a program obtained from data reproduced from the ROM layer 5, or application software are stored.

With reference to Fig. 3, the following details the control section 20 which is a main part of the optical disc device 1 in accordance with the present embodiment.

As shown in Fig. 3, the control section 20 mainly includes the disc management section 21, a reproduction control section (reproduction control means, identification information reproduction control means, interlayer-movement control means) 22, a pickup control section 23, a laser control section 24, a software program management section 25, and a recording control section (recording control means) 26.

The disc management section 21 receives, from the disc loading recognition section 6, a detection signal indicating that the optical disc 2 has been loaded and specifies the structure of the optical disc 2 based on identification information obtained from the optical disc 2, so as to control operations of the reproduction control section 22, the software program management section 25, and the recording control section 26.

The reproduction control section 22 mainly includes an identification information reproduction instruction section (identification information reproduction control means) 221, an interlayer-jump instruction section (interlayer-movement control means) 222, and a reproduced data process section 223.

The reproduction control section 22 causes the identification information reproduction instruction section 221, the interlayer-jump instruction section 222, and the reproduced data process section 223 to operate so as to acquire identification information from the optical disc 2 and acquire data reproduced from the ROM layer 5 of the optical disc 2.

The identification information reproduction instruction section 221 instructs the pickup control section 23 and the laser control section 24 to control reproduction of identification information recorded on the identification information recording region 41 of the optical disc 2. This enables the optical disc device 1 to acquire identification information, thereby specifying the structure of the optical disc 2.

When the disc management section 21 specifies the structure of the optical disc 2, the interlayer-jump instruction section 222 receives, from the disc management section 21, a notification indicating that the structure of the optical disc 2 is specified (medium structure specification notification) and information indicative of the structure of the optical disc 2, and instructs the pickup control section 23 and the laser control section 24 to cause a light spot of reproducing light to make interlayer-movement from the interlayer-jump start position SP to the interlayer-jump end position EP.

In [1. Configuration of optical information recording medium], an explanation was made as to the interlayer-movement Flag. The optical disc device 1 in accordance with the present embodiment may be designed such that the optical disc device 1 controls interlayer-movement by using the interlayer-movement Flag recorded on the optical disc 2, or the optical disc device 1 controls interlayer-movement on an optical information recording medium without the interlayer-movement Flag.

The interlayer-movement without using the interlayer-movement Flag may be made in such a manner that, for example, the disc management section 21 causes the interlayer-jump instruction section 222 to operate with specification of the structure of an optical information storage medium as a trigger.

This enables interlayer-movement of the light spot of reproducing light when the structure of the optical information recording medium is specified based on the identification information.

The reproduced data process section 223 processes various reproduced data transmitted from the reproduction circuit 15 (e.g. processes such as correction of reproduction signal and analog/digital conversion), and causes the processed reproduced data to be stored in the storage section 3.

Further, the reproduced data process section 223 carries out, for example, a process of causing a software program recorded beforehand on the ROM layer 5 to be temporarily stored in the software program storage section 33, notifying the software program management section 25 that the software program is temporarily stored, and causing the software program management section 25 to start the software program.

The software program management section 25 manages processes from starting to ending of various programs such as an OS for operating the optical disc device 1 and other application programs which are recorded on the ROM layer 5 of the optical disc 2 or in the storage section 3, thereby realizing the operations by these programs.

The optical disc device 1 may be designed such that in a case where the interlayer-movement Flag is recorded on the identification information recording region 41 of the RE/R layer 4 as in the optical disc 2, the identification information reproduction instruction section 221 reproduces the interlayer-movement Flag, and when the reproduced interlayer-movement Flag is set to "1", the interlayer-jump instruction section 222 instructs interlayer-movement.

This enables shortening a time from acquiring identification information from an optical information recording medium with the interlayer-movement Flag, such as the optical disc 2, to starting a program recorded on an ROM layer of the optical information recording medium.

The optical disc device 1 may be designed such that the recording control section 26 generates and records the interlayer-movement Flag in an identification information recording region (blank region of the identification information recording region) of an optical information recording medium without the interlayer-movement Flag.

In this case, the optical disc device 1 may be designed such that the identification information reproduction instruction section 221 reproduces the interlayer-movement Flag recorded by the recording control section 26 as well as identification information, and when the reproduced interlayer-movement Flag is set to "1", the interlayer-jump instruction section 222 instructs interlayer-movement.

This enables the optical disc device 1 to change an optical information recording medium having no interlayer-movement Flag in its identification information recording region into an optical information recording medium having interlayer-movement Flag in its identification information recording region. Therefore, use of the optical information recording medium thus changed enables shortening a time from acquiring identification information to starting a program etc. recorded on a ROM layer.

Generation of the interlayer-movement Flag etc. by the recording control section 26 may be made at a time when a user instructs, via the operation section 7, the recording control section 26 to generate and record an interlayer-movement Flag in (a blank region) of an identification information recording region of an optical information medium without the interlayer-movement Flag. Alternatively, generation of the interlayer-movement Flag may be made at a time when the disc management section 21 recognizes that an optical information recording medium without an interlayer-movement Flag is loaded. In the latter case, the disc management section 21 instructs the recording control section 26 to generate the interlayer-movement Flag etc.

As described above, at a time when the structure of an optical information recording medium (including not only optical information recording medium such as optical disc 2 and later-mentioned optical discs 2A-2C having interlayer-movement Flag but also optical information recording medium without interlayer-movement Flag) is specified by reading the identification information recorded in advance on the identification information recording region of the RE layer or R layer of the optical information recording medium, it is possible to make the interlayer-movement in a predetermined manner and to reproduce information recorded in advance on the ROM layer. Consequently, it is possible to move the light spot to the ROM layer without moving the light spot in the same RE layer or R layer after acquiring the identification information and specifying the structure of the optical information recording medium, thereby reading information recorded on the ROM layer (e.g. program such as software).

This enables shortening a time from acquiring identification information to starting a program etc. recorded on an ROM layer.

### [3. Operation of optical information recording and reproducing device]

With reference to Figs. 4-9, the following details the operation of the optical disc device 1. Configurations other than the configuration explained in [3. Operation of optical information recording and reproducing device] are the same as those in [1. Configuration of optical information recording medium] and [2. Configuration of optical information recording and reproducing device]. For convenience of explanation, members having the same functions as those shown in the drawing in [1. Configuration of optical information recording medium] and [2. Configuration of optical information recording and reproducing device] are given the same reference numerals and explanations thereof are omitted here. In the subsequent items, these notes will be omitted.

An operation flowchart shown in (a) of Fig. 4 corresponds to a case where information is reproduced from the ROM layer 5 in such a manner that reproduction starts from a portion closer to the internal periphery of the optical disc 2 to a portion closer to the external periphery of the optical disc 2. An operation flowchart shown in (b) of Fig. 4 corresponds to a case where information is reproduced from the ROM layer 5 in such a manner that reproduction starts from a portion closer to the external periphery of the optical disc 2 to a portion closer to the internal periphery of the optical disc 2.

Which of the operation flowcharts shown in (a) and (b) of Fig. 4 is to be carried out depends on the direction of a spiral of the optical disc 2.

In the operation flowchart, an explanation is made as to a case where the optical disc 2 is used and the interlayer-movement Flag is always set to "1" (that is, an explanation as to the interlayer-movement Flag will be hereinafter omitted). Further, the present embodiment is based on the premise that the identification information recording region 41 of the RE/R layer 4 where the interlayer-movement Flag is recorded is positioned to be closer to the internal periphery of the optical disc 2, and reproduction of information from the user recording region 43 is made from a portion closer to the internal periphery to a portion closer to the external periphery.

However, the present invention is not limited to the above embodiment. For example, the optical disc device 1 may be arranged such that even if an optical information recording medium does not have interlayer-movement Flag, interlayer-movement t is made by an operation of the optical disc device 1 as described above. Alternatively, the optical disc device 1 may change an optical information recording medium into a one with interlayer-movement Flag, set the interlayer-movement Flag to "1", and carries the following operation.

Steps other than step S3 (hereinafter the term "step" will be omitted here) in (a) of Fig. 4 and S13 in (b) of Fig. 4 are common between (a) of Fig. 4 and (b) of Fig. 4. Accordingly, an explanation will be mainly made as to the operation flowchart in (a) of Fig. 4, and an explanation as to the operation flowchart in (b) of Fig. 4 is limited to S13.

In the operation flowchart in (a) of Fig. 4, when the optical disc 2 is loaded to a predetermined position of the optical disc device 1, the disc loading recognition section 6 detects loading of the optical disc 2 and a signal indicative of detection of loading of the optical disc 2 (loading detection signal) is transmitted to the disc management section 21. Then, the process goes to S2.

In S2, the disc management section 21 causes the identification information reproduction instruction section 221 of the reproduction control section 22 to operate with reception of the loading detection signal from the disc loading recognition section 6 as a trigger.

The identification information reproduction instruction section 221 instructs the pickup control section 23 to operate the pickup drive circuit 13 so as to control the position of an optical pickup, and instructs the laser control section 24 to operate the laser drive circuit 14 so as to emit reproducing laser (reproducing light) to the optical disc 2, thereby reproducing identification information recorded on the identification information recording region 41 of the optical disc 2. The identification information reproduction instruction section 221 notifies the reproduced data process section 223 of the reproduction of the identification information (identification information reproduction notification). Then, the process goes to S3.

In S3, in response to the identification information reproduction notification, the reproduced data process section 223 causes the reproduced data of the identification information, which is transmitted from the reproduction circuit 15 to the control section 20 and which has been reproduced in S2, to be stored in the identification information reproduced data storage section 31, and notifies the disc management section 21 that the reproduced data of the identification information is stored (identification information acquirement notification).

In response to the identification information acquirement notification, the disc management section 21 specifies the structure of the optical disc 2 based on the identification information stored in the identification information reproduced data storage section 31, and causes the interlayer-jump instruction section 222 to operate in accordance with the specified structure of the optical disc 2.

The interlayer-jump instruction section 222 causes the pickup control section 23 to interlayer-move the light spot of reproducing laser of the optical pickup 12 from the current position (interlayer-jump start position SP) to a predetermined interlayer-jump end position EP. Then, the process goes to S4.

In the operation flowchart of (a) of Fig. 4, the interlayer-jump end position EP is positioned at the internal periphery of the ROM layer 5 of the optical disc 2.

Examples of such interlayer-movement include patterns shown in Figs. 5, 7, and 9.

Fig. 5 shows a case where interlayer-movement of a light spot of the reproducing light is made to the internal periphery of the ROM layer in the optical disc 2.

Fig. 7 shows a case where in an optical disc 2A including two layers of RMO layers each similar to the ROM layer 5 of the optical disc 2 (the ROM layers 5A and 5B are positioned to be closer to a viewer when seen from a direction in which reproducing light is incident), interlayer-movement of a light spot of the reproducing light is made to the ROM layer 5B.

Fig. 9 shows a case where in an optical disc 2C including an RE/R layer 4 which is similar to the RE/R layer 4 of the optical disc 2 and which is positioned closer to a viewer when seen from a direction in which reproducing light is incident and two layers of ROM layers 5A and 5B which are positioned farer to the viewer, interlayer-movement of a light spot of the reproducing light is made to the ROM layer 5A.

As is seen from these patterns, when the interlayer-jump end position EP is positioned at the internal periphery of the optical disc 2, the optical disc 2A, and the optical disc 2C, it is possible to shorten a distance by which a light spot of the reproducing light travels to a position on an information recording plane of the ROM layer 5 (ROM layers 5A and 5B) where information is recorded beforehand (interlayer-jump end position EP), after specifying the structure of the optical disc 2 by reproducing identification information recorded on the identification information recording region 41. Consequently, it is possible to shorten a time from acquiring the identification information to starting a program etc. recorded on the ROM layer (ROM layer 5A and the ROM layer 5B).

The interlayer-movements shown in Figs. 5, 7, and 9 are carried out in such a manner that the light spot travels by the shortest distance from the identification information recording region 41 of the RE/R layer 4 to the ROM layer 5 (moves directly above or directly below on the drawing).

Such an interlayer-movement enables shortening a time from acquiring the identification information to starting a program etc. recorded on the ROM layer (ROM layers 5A and 5B).

An example of the "shortest distance" is a distance between the interlayer-jump start position SP and an intersection point of a line extending from the interlayer-jump start position SP in a direction normal to a plane where reproducing light is incident and the information recording plane of the ROM layer 5.

In a case where there are two or more ROM layers, an example of the "shortest distance" is a distance between the interlayer-jump start position SP and the closest one of intersection points of a line extending from the interlayer-jump start position SP in a direction normal to a plane where reproducing light is incident and a plurality of ROM layers (ROM layers 5A and 5B), as shown in Figs. 7 and 9. The closest one of the intersection points is on the ROM layer 5B in Fig. 7, and on the ROM layer 5A in Fig. 9.

Subsequently, in S4, with completion of interlayer-movement by the interlayer-jump instruction section 222 as a trigger, the reproduction control section 22 causes the pickup control section 23 and the laser control section 24 to operate so as to reproduce information recorded beforehand on the ROM layer 5 of the optical disc 2, and notifies the reproduced data process section 223 that the information is reproduced (ROM reproduction notification).

In response to the ROM reproduction notification, the reproduced data process section 223 causes ROM reproduction data transmitted from the reproduction circuit 15 to be stored in the ROM reproduced data storage section 32 or the software program storage section 33, and notifies the software program management section 25 of the storage of the ROM reproduction data (ROM reproduction data storage notification). Then, the process goes to S5.

In S5, in response to the ROM reproduction data storage notification, the software program management section 25 reads out the ROM reproduction data stored in the ROM reproduced data storage section 32 or the software program storage section 33, and starts the read-out program and the process goes to "END".

The following explains S13 in the operation flowchart shown in (b) of Fig. 4.

In S13, in response to the identification information reproduction notification, the reproduced data process section 223 causes the reproduced data of the identification information, which is transmitted from the reproduction circuit 15 to the control section 20 and which has been reproduced in S12, to be stored in the identification information reproduced data storage section 31, and notifies the disc management section 21 of the storage of the reproduced data of the identification information (identification information acquirement notification).

In response to the identification information acquirement notification, the disc management section 21 specifies the structure of the optical disc 2 based on the identification information stored in the identification information reproduced data storage section 31, and causes the interlayer-jump instruction section 222 to operate in accordance with the specified structure of the optical disc 2.

The interlayer-jump instruction section 222 causes the pickup control section 23 to interlayer-move the light spot of reproducing laser of the optical pickup 12 from the current position (interlayer-jump start position SP) to a predetermined interlayer-jump end position EP. Then, the process goes to S 14.

In the operation flowchart of (b) of Fig. 4, the interlayer-jump end position EP is positioned at the external periphery of the ROM layer 5 of the optical disc 2.

Examples of such interlayer-movement include patterns shown in Figs. 6 and 8.

Fig. 6 shows a case where interlayer-movement of a light spot of the reproducing light is made to the external periphery of the ROM layer 5 in the optical disc 2.

Fig. 8 shows a case where in an optical disc 2B obtained by arranging the optical disc 2 such that the ROM layer 5 is positioned farer from a plane where the reproducing light is incident and that the RE/R layer 4 is positioned closer to the plane, interlayer-movement of a light spot of the reproducing light is made to the ROM layer 5.

These patterns correspond to cases where the interlayer-jump end position EP is positioned at the external periphery of the optical disc 2 and the optical disc 2B, and identification information recorded on the RE/R layer 4 is positioned at the internal periphery of the optical disc 2 and the optical disc 2B. In this case, the light spot is moved from the interlayer-jump start position SP to the interlayer-jump end position EP, and then the light spot moves from the external periphery of the ROM layer to the internal periphery thereof.

Consequently, for example, when the light spot accesses the RE/R layer 4 at the internal periphery after reproducing information recorded on the ROM layer 5 in advance from the external periphery to the internal periphery, the distance by which the light spot travels is short. This enables promptly starting a recording operation.

### [4. Timing at which interlayer-movement is carried out]

The following explains preferable timing at which interlayer-movement is carried out. Herein, an example of an optical information recording medium is the optical disc 2.

First preferable timing at which the interlayer-movement is carried out is before reproducing management information stored in the management information recording region 42.

Since the information recorded beforehand on the ROM layer 5 is reproduced before the management information is reproduced, it is possible to shorten a time from acquiring identification information to starting a program etc. recorded on the ROM layer 5, compared with a case where the management information is reproduced after acquiring the identification information.

Second preferable timing at which the interlayer-movement is carried out is before recording information on the user recording region 43 of the RE/R layer 4.

Since the information recorded beforehand on the ROM layer 5 is reproduced before information is recorded on the RE/R layer 4 (by the recording control section 26), it is possible to shorten a time from acquiring identification information to starting a program etc. recorded on the ROM layer 5, compared with a case where the information is recorded on the RE/R layer 4 after acquiring identification information.

As described above, the optical disc device 1 enables shortening a time from acquiring identification information to starting a program etc. recorded on an ROM layer of an optical information recording medium, such as the optical disc 2 and the optical discs 2A-2C.

Explanations have been made above as to a case where the interlayer-movement Flag set to "1" indicates that interlayer-movement is permitted and the interlayer-movement Flag set to "0" indicates that interlayer-movement is not permitted. However, the present invention is not limited to this case.

Interlayer-movement can be made in the same manner as in the foregoing explanations, provided that information indicating that interlayer-movement is permitted and information indicating that interlayer-movement is not permitted are set as different data items.

### [Embodiment 2]

The following explains Embodiment 2 of the present invention. In Embodiment 1, as shown in Fig. 1, an interlayer-movement Flag different from normal identification information is recorded on the identification information recording region 41 of the optical disc 2. The interlayer-movement Flag indicates that interlayer-movement of a light spot of reproducing light from the identification information recording region 41 of the RE/R layer 4 to the ROM layer 5 is permitted, or indicates that such interlayer-movement is not permitted.

In Embodiment 1, the optical disc device 1 recognizes setting of the interlayer-movement Flag and causes interlayer-movement, so as to shorten a time from acquiring identification information recorded on the identification information recording region 41 beforehand to starting a program etc. recorded on the ROM layer 5.

In contrast thereto, in Embodiment 2, information indicating that the interlayer-movement is permitted or not permitted is not recorded in an identification information recording region of an optical disc separately from normal identification information.

That is, in the present embodiment, the optical disc device 1 recognizes, from identification information recorded beforehand on an identification information recording region of an optical disc, the structure of the optical disc such as how many information recording layers the optical disc includes and what recording property each information recording layer has, and when the optical disc device 1 recognizes an ROM layer as well as an RE/R layer on which a light spot of reproducing light is positioned at present, the optical disc device 1 carries out the interlayer-movement. Consequently, it is unnecessary to cause information such as the interlayer-movement Flag different from normal identification information to be separately stored in the identification information recording region of the optical disc.

Consequently, in the present embodiment, it is unnecessary to reproduce information different from normal identification information, thereby quickening a time to carry out the interlayer-movement.

The following explains Embodiment 2 of the present invention with reference to the drawings. (a) of Fig. 10 is a drawing schematically showing an optical disc 2D in accordance with Embodiment 2. Hereinafter, members similar to those in Embodiment 1 are given the same reference numerals and details thereof are omitted.

As shown in (a) of Fig. 10, the optical disc 2D of the present embodiment at least includes an RE/R layer (first information recording layer) 4D and an ROM layer (second information recording layer) 5D. Information on individual information recording layers can be read out by emitting reproducing light to the individual information recording layers. In the optical disc 2, the information recording layers are only two layers consisting of the RE/R layer 4D and the ROM layer 5D. Alternatively, there may be three or more information recording layers. Further, the RE/R layer 4D may be any of an RE layer and an R layer.

The following mainly explains a difference between the RE/R layer 4D in accordance with the present embodiment and the RE/R layer 4 in accordance with Embodiment 1, and a difference between the ROM layer 5D in accordance with the present embodiment and the ROM layer 5 in accordance with Embodiment 1.

Initially, an explanation is made as to the difference between the RE/R layer 4D in accordance with the present embodiment and the RE/R layer 4 in accordance with Embodiment 1.

As shown in (a) of Fig. 10, the RE/R layer 4D in accordance with the present embodiment includes an identification information recording region 41 D and a user recording region 43D. On the identification information recording region 41D of the RE/R layer 4D, normal identification information is recorded beforehand.

That is, on the identification information recording region 41 D of the RE/R layer 4D, an interlayer-movement Flag different from normal identification information is not recorded, unlike the identification information recording region 41 of the RE/R layer 4 in accordance with Embodiment 1.

In the case of the optical disc 2D in accordance with the present embodiment, when identification information is recorded beforehand on the identification information recording region 41D of the RE/R layer 4D, the optical disc device 1 recognizes that interlayer-movement of a light spot of reproducing light from the identification information recording region 41D of the RE/R layer 4D to the ROM layer 5D is permitted.

In Embodiment 2 as well as Embodiment 1, examples of the identification information include the type of a layer in a disc, the size of a disc, the version of a disc, standard conditions for recording/reproducing information on/from a disc, the polarity of a servo, the polarity of a recording mark, and the number unique to a disc. In general, each of these information is repeatedly recorded on the identification information recording region 41 D.

Therefore, the optical disc device 1 may be designed such that predetermined interlayer-movement is made at a time when identification information recorded beforehand on the identification information recording region 41 D starts to be read and then the structure of the optical disc 2D can be specified.

In this case, after acquiring the identification information and specifying the structure of the optical disc 2D, it is possible to move the light spot to the ROM layer 5D without moving the light spot in the same RE/R layer 4D, thereby reading information (program such as software) recorded on the ROM layer 5D.

Since the interlayer-movement can be made without reading out all the identification information recorded beforehand on the identification information recording region 41D, it is possible to shorten a time from acquiring the identification information to starting a program etc. recorded on the ROM layer 5D.

The following explains the difference between the ROM layer 5D in accordance with the present embodiment and the ROM layer 5 in accordance with Embodiment 1

As shown in (a) of Fig. 10, unlike the ROM layer 5 in accordance with Embodiment 1, the ROM layer 5D in accordance with the present embodiment includes a management information recording region 51D in which management information for managing reproduction of information from the ROM layer 5D is recorded beforehand.

Needless to say, a recording position of management information recorded beforehand on the management information recording region 51 D is not limited to the management information recording region 51D in the optical disc 2D. For example, in a case where the RE/R layer 4D also includes a management information recording region (not shown), the same management information may be recorded also on that management information recording region. The point is that the ROM layer 5D includes the management information recording region 51 D in which management information for managing reproduction of information from the ROM layer 5D is recorded beforehand.

Further, as shown in (a) of Fig. 10, the management information recording region 51 D of the ROM layer 5D is positioned right below the identification information recording region 41D of the RE/R layer 4D when seen from a direction normal to the drawing. (a) of Fig. 10 shows that interlayer-movement of a light spot of reproducing light from the optical pickup 12 is made from the interlayer-movement jump start position SP to the interlayer-movement jump end position EP.

Specifically, the interlayer-movement jump start position SP is a position on the identification information recording region 41D which position corresponds to a time point when the structure of the optical disc 2D is specified based on the identification information recorded in advance on the identification information recording region 41D. The interlayer-movement jump end position EP is a position on the management information recording region 51 of the ROM layer 5D.

Interlayer-movement of the light spot is made by the shortest distance from the identification information recording region 41 D of the RE/R layer 4D to the management information recording region 51D of the ROM layer 5D.

This configuration enables reproducing management information immediately after acquiring identification information. Therefore, it is possible to shorten a time from acquiring identification information to starting a program etc. recorded on the ROM layer 5D, compared with a case of reproducing management information recorded on the management information recording region (not shown) of the RE/R layer 4D.

In (a) of Fig. 10, the management information recording region 51D of the ROM layer 5D is provided right below the identification information recording region 41 D of the RE/R layer 4D when seen from a direction normal to the drawing. However, the present embodiment is not limited to this configuration. For example, as is exemplified by an optical disc 2E shown in (b) of Fig. 10, a management information recording region 51E of an ROM layer 5E may be positioned close to an identification information recording region 41 E of an RE/R layer 4E.

Also in this case, it is possible to reproduce management information immediately after acquiring identification information, since interlayer-movement of the light spot of the reproducing light is made by a relatively short distance from the identification information recording region 41D of the RE/R layer 4D to the management information recording region 51 D of the ROM layer 5D.
(a) of Fig. 10 shows a case where the interlayer-jump end position EP is at the center or substantially center of the management information recording region 51D of the ROM layer 5D. However, the present invention is not limited to this. The interlayer-jump end position EP may be any position as long as the position is within the management information recording region 51D. Alternatively, the interlayer-jump end position EP may be not within the management information recording region 51D but close to the management information recording region 51 D.
(b) of Fig. 10 shows a case where the interlayer-jump end position EP is at the center or substantially center of the management information recording region 51E of the ROM layer 5E. However, the present invention is not limited to this. The interlayer-jump end position EP may be any position as long as the position is within the management information recording region 51E. Alternatively, the interlayer-jump end position EP may be not within the management information recording region 51E but close to the management information recording region 51 E.

### [Embodiment 3]

The following explains Embodiment 3 of the present invention. In Embodiment 1 as described above, an interlayer-movement Flag different from normal identification information is recorded on the identification information recording region 41 of the optical disc 2, as shown in Fig. 1.

In contrast thereto, In Embodiment 3, the interlayer-movement Flag is recorded not on the identification information recording region 41 of the optical disc 2 but on the management information recording region 42 of the optical disc 2.

An explanation is made below as to Embodiment 3 with reference to Figs. 1-3 and 11. Hereinafter, operations of an optical information reproducing device in accordance with the present embodiment which are different from those of the optical information reproducing device in accordance with Embodiment 1 are mainly explained. Members similar to those in Embodiment 1 are given the same reference numerals and details thereof are omitted.
(a) of Fig. 11 is a flowchart showing an operation of the optical information recording and reproducing device in accordance with the present embodiment. (b) of Fig. 11 is a flowchart showing another operation of the optical information recording and reproducing device in accordance with the present embodiment.

An operation flowchart shown in (a) of Fig. 11 corresponds to a case where information is reproduced from the ROM layer 5 in such a manner that reproduction starts from a portion closer to the internal periphery of the optical disc 2 to a portion closer to the external periphery of the optical disc 2. An operation flowchart shown in (b) of Fig. 11 corresponds to a case where information is reproduced from the ROM layer 5 in such a manner that reproduction starts from a portion closer to the external periphery of the optical disc 2 to a portion closer to the internal periphery of the optical disc 2.

Which of the operation flowcharts shown in (a) and (b) of Fig. 11 is to be carried out depends on the direction of a spiral of the optical disc 2. In the operation flowchart of (a) of Fig. 11, the interlayer-jump end position EP is positioned to be inwardly from the ROM layer 5 of the optical disc 2. On the other hand, in the operation flowchart of (b) of Fig. 11, the interlayer-jump end position EP is positioned to be outwardly from the ROM layer 5 of the optical disc 2.

In these operation flowcharts, an explanation is made as to a case where the optical disc 2 is used and the interlayer-movement Flag is always set to "1" (that is, an explanation of the interlayer-movement Flag will be omitted hereinafter). Further, these operation flowcharts are on the premise that the management information recording region 42 of the RE/R layer 4 where the interlayer-movement Flag exists is positioned to be close to the internal periphery of the optical disc 2, and information on the user recording region 43 is reproduced in such a manner that reproduction proceeds from the internal periphery to the external periphery.

Steps other than steps S22 (hereinafter the term "step" will be omitted), S23, and S24 in (a) of Fig. 11 and steps other than S32, S33, and S34 in (b) of Fig. 11 are the same as those in (a) of Fig. 4 and (b) of Fig. 4. Further, S22, S23, and S24 in (a) of Fig. 11 are the same as S32, S33, and S34 in (b) of Fig. 11. Accordingly, hereinafter, an explanation is made only as to S22, S23, and S24 in (a) of Fig. 11, and explanations as to steps other than S22, S23, and S24 are omitted here.

In S22 in (a) of Fig. 11, the disc management section 21 causes the identification information reproduction instruction section 221 of the reproduction control section 22 to operate with reception of the loading detection signal from the disc loading recognition section 6 as a trigger.

The identification information reproduction instruction section 221 instructs the pickup control section 23 to operate the pickup drive circuit 13 so as to control the position of an optical pickup, and instructs the laser control section 24 to operate the laser drive circuit 14 so as to emit reproducing laser (reproducing light) to the optical disc 2, thereby reproducing identification information recorded on the identification information recording region 41 of the optical disc 2. The identification information reproduction instruction section 221 notifies the reproduced data process section 223 of the reproduction of the identification information (identification information reproduction notification). Then, the process goes to S23.

In S23, the identification information reproduction instruction section 221 continuously cause the pickup control section 23 to operate the pickup drive circuit 13 so as to control the position of the optical pickup, and instructs the laser control section 24 to operate the laser drive circuit 14 so as to emit reproducing laser (reproducing light) to the optical disc 2, thereby reproducing management information recorded on the management information recording region 42 of the optical disc 2. The identification information reproduction instruction section 221 notifies the reproduced data process section 223 of the reproduction of the management information (management information reproduction notification). Then, the process goes to S23.

In S24, initially, in response to the identification information reproduction notification and the management information reproduction notification, the reproduced data process section 223 causes reproduced data of the identification information, which is transmitted from the reproduction circuit 15 to the control section 20, to be stored in the identification information reproduced data storage section 31 of the storage section 3, and notifies the disc management section 21 that the reproduced data of the identification information is stored (identification information acquirement notification).

In response to the identification information acquirement notification, the disc management section 21 specifies a structure of the optical disc 2 based on identification information stored in the identification information reproduced data storage section 31.

Further, in response to the management information reproduction notification, the reproduced data process section 223 causes the interlayer-jump instruction section 222 to operate in accordance with the specified structure of the optical disc 2.

The interlayer-jump instruction section 222 instructs the pickup control section 23 to cause a light spot of reproducing light from the pickup 12 to make interlayer-movement from the current position (interlayer-jump start position SP) to a predetermined interlayer-jump end position EP. Then, the process goes to S25.

In the present embodiment, the interlayer-movement Flag in accordance with Embodiment 1 is recorded in the management information recording region 42 of the optical disc 2. However, the present invention is not limited to this. The point is that a region where the interlayer-movement Flag is to be recorded is determined so that the interlayer-movement is carried out before a user records (or additionally records) desired information on the user recording region 43 of the user RE/R layer 4D.

Since the information recorded in advance on the ROM layer 5 is reproduced before the user records information on the RE/R layer 4, it is possible to shorten a time from acquiring the identification information to starting a program etc. recorded on the ROM layer 5.

In Embodiment 3, an explanation was made as to a case where the interlayer-movement Flag is recorded not on the identification information recording region 41 of the optical disc 2 but on the management information recording region 42. However, the present invention is not limited to this. The interlayer-movement Flag may be recorded both on the identification information recording region 41 and the management information recording region 42. In this case, the present invention may be arranged such that when one or both of the interlayer-movement Flags in the identification information recording region 41 and the management information recording region 42 is reproduced, it is recognized that interlayer-movement is permitted, and the interlayer-movement is carried out.

Alternatively, instead of the interlayer-movement Flag explained in Embodiment 3, information for specifying a structure of the optical disc such as how many information recording layers the optical disc includes and what recording property each information recording layer has may be recorded in advance on the management information recording region 42 of the optical disc. When the optical disc device recognizes the information and recognizes that there exists an ROM layer as well as an RE/R layer where a light spot of reproducing light is positioned at present, it is possible to carry out the interlayer-movement.

Further, the optical information recording medium of the present invention may be arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, a portion where the identification information is stored is positioned to be inwardly from a position where the file management information is stored, and the identification information includes information for reproducing information on the reproduction-only layer before reproducing the file management information.

Further, the optical information recording medium of the present invention may be arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, a portion where the identification information is stored is positioned to be inwardly from a position where the file management information is stored, and the identification information includes information for reproducing information on the reproduction-only layer before recording information on the recording region of the recordable layer.

Further, an optical information recording and reproducing method of the present invention may be a method for recording information on and reproducing information from an optical information recording medium which is arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, and a portion where the identification information is stored is positioned to be inwardly from a position where the file management information is stored, the method including the steps of (i) reproducing the identification information stored in the information layer farthest from the incident plane, (ii) causing light to make interlayer-movement to the reproduction-only layer, (iii) reproducing information stored in the reproduction-only layer, and thereafter (iv) reproducing the file management information stored in the recordable layer.

Further, the optical information recording and reproducing method of the present invention may be a method for recording information on and reproducing information from an optical information recording medium which is arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, and a portion where the identification information is stored is positioned to be inwardly from a position where the file management information is stored, the method including the steps of (i) reproducing the identification information stored in the information layer farthest from the incident plane, (ii) causing light to make interlayer-movement to the reproduction-only layer, (iii) reproducing information stored in the reproduction-only layer, and thereafter (iv) recording information in the recordable layer.

Further, an optical information recording and reproducing device of the present invention may be an optical information recording and reproducing device for recording information on and reproducing information from an optical information recording medium which is arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, and a portion where the identification information is stored is positioned to be inwardly from a position where the file management information is stored, the optical information recording and reproducing device including: identification information reproduction means for reproducing the medium identification information stored in the information layer farthest from the incident plane; interlayer-movement means for causing light to make interlayer-movement to the reproduction-only layer; reproduction-only layer information reproduction means for reproducing information stored in the reproduction-only layer; and file management information reproduction means for reproducing the file management information stored in the recordable layer, reproduction of the information by the reproduction-only layer information reproduction means being made before recordation of the information by the file management information reproduction means.

Further, the optical information recording and reproducing device of the present invention may be an optical information recording and reproducing device for recording information on and reproducing information from an optical information recording medium which is arranged such that the optical information recording medium includes two or more information layers, from each of which information is readable by emitting light via one of disc planes, at least one of said two or more information layers, which one includes an information layer farthest from an incident plane, is a recordable layer having a recording region, at least one information layer which is closer to the incident plane than the recordable layer is a reproduction-only layer, the information layer farthest from the incident plane stores identification information and file management information, and a portion where the identification information is stored is positioned to be inwardly from a position where the file management information is stored, the optical information recording and reproducing device including: identification information reproduction means for reproducing the medium identification information stored in the information layer farthest from the incident plane; interlayer-movement means for causing light to make interlayer-movement to the reproduction-only layer; reproduction-only layer information reproduction means for reproducing information stored in the reproduction-only layer; and recording means for recording information in the recording region of the recordable layer, reproduction of the information by the reproduction-only layer information reproduction means being made before recordation of the information by the recording means.

The optical information recording medium of the present invention may be arranged so as to include two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, and the identification information being used for causing the light spot of the reproducing light to make interlayer-movement from the first information recording layer to the second information recording layer.

The optical information recording medium of the present invention may be arranged such that the second information recording layer includes a management information recording region for recording in advance management information for managing reproduction of information from the second information recording layer, the management information recording region being positioned to be close in a radial direction to the portion where the identification information is stored.

The optical information recording medium of the present invention may be arranged so as to include two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance and a management information recording region where management information for managing recordation of information on and/or reproduction of information from the first information recording layer is recorded in advance, and interlayer-movement permission information indicative of permission for a light spot of the reproducing light to make interlayer-movement from the management information recording region of the first information recording layer to the second information recording layer being recorded on the management information recording region.

The optical information recording medium may be arranged such that the first information recording layer further includes a recording region in which a user is capable of recording desired information, and the recording region is positioned to be close to the management information recording region in a radial direction.

The optical information recording medium may be arranged such that the recording layer is positioned to be outwardly from the management information recording region in a radial direction.

An optical information recording and reproducing device of the present invention may be an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the optical information recording and reproducing device comprising: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the management information recording region of the first information recording layer to the second information recording layer; and reproduction control means for reproducing information recorded in advance on the second information recording layer.

The optical information recording and reproducing device of the present invention may be arranged such that the first information recording layer further includes a recording region on which a user is capable of recording desired information, and the interlayer-movement of the light spot of the reproducing light is made before information is recorded on the recording region.

A method of the present invention for controlling an optical information recording and reproducing device is a method for controlling an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the method comprising the steps of: (i) reproducing the identification information from the identification information recording region; (ii) when a structure of the optical information recording medium is specified based on the identification information reproduced in the step (i), causing a light spot of the reproducing light to make interlayer-movement from the management information recording region of the first information recording layer to the second information recording layer; and (iii) reproducing information recorded in advance on the second information recording layer.

The optical information recording and reproducing device of the present invention may be arranged such that the first information recording layer further includes a recording region on which a user is capable of recording desired information, and the interlayer-movement of the light spot of the reproducing light is made before information is recorded on the recording region.

The present invention is not limited to the description of the embodiments above, but may be altered by a skilled person within the scope of the claims. An embodiment based on a proper combination of technical means disclosed in different embodiments is encompassed in the technical scope of the present invention.

Each block of the optical disc device 1, the control section 20 in particular, may be realized by hardware logic or may be realized by software by using a CPU as described below.

Namely, the optical disc device 1 includes: a CPU (central processing unit) for executing a control program for realizing functions of each block; a ROM (read only memory) that stores the program; a RAM (random access memory) that develops the program; a storage device (storage medium) such as a memory in which the program and data are stored; and the like. The object of the present invention can be realized in such a manner that the optical disc device 1 is provided with a computer-readable storage medium for storing program codes (such as executable program, intermediate code program, and source program) of the control program of the optical disc device 1 which program serves as software for realizing the functions, and a computer (alternatively, CPU or MPU) reads out and executes the program codes stored in the storage medium.

The storage medium is, for example, tapes such as a magnetic tape and a cassette tape, or discs such as magnetic discs (e.g. a floppy disc® and a hard disc), and optical discs (e.g. CD-ROM, MO, MD, DVD, and CD-R). Further, the storage medium may be cards such as an IC card (including a memory card) and an optical card, or semiconductor memories such as mask ROM, EPROM, EEPROM, and flash ROM.

Further, the optical disc device 1 may be arranged so as to be connectable to a communication network so that the program code is supplied to the optical disc device 1 through the communication network. The communication network is not particularly limited. Examples of the communication network include the Internet, intranet, extranet, LAN, ISDN, VAN, CATV communication network, virtual private network, telephone network, mobile communication network, and satellite communication network. Further, a transmission medium that constitutes the communication network is not particularly limited. Examples of the transmission medium include (i) wired lines such as IEEE 1394, USB, power-line carrier, cable TV lines, telephone lines, and ADSL lines and (ii) wireless connections such as IrDA and remote control using infrared ray, Bluetooth®, 802.11, HDR, mobile phone network, satellite connections, and terrestrial digital network. Note that the present invention can be also realized by the program codes in the form of a computer data signal embedded in a carrier wave, which is the program that is electrically transmitted.

As described above, the optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, and interlayer-movement permission information indicative of permission for a light spot of the reproducing light to make interlayer-movement from the identification information recording region of the first information recording layer to the second information recording layer being recorded on the identification information recording region.

With the arrangement, the optical information recording medium includes two or more information recording layers, from each of which information is readable by emitting reproducing light thereto.

The term "information recording layer" includes an information recording region or an information recording plane where information is recorded, and indicates a single film or multilayered film made of a reflective film, recording film etc. having a specific recording property, or a predetermined range in a medium surface direction (in-plane direction of a plane where reproducing light is incident) at an interface between two layers.

Examples of the information recorded on the optical information recording medium of the present invention include information already recorded on the optical information recording medium in shipping, information recorded by a user on the optical information recording medium after shipping, and information recorded by the operation of an optical information recording and reproducing device (which will be mentioned later) on the optical information recording medium after shipping.

Further, in the optical information recording medium, at least one layer is a first information recording layer where information is rewritable or information is only additionally recordable (hereinafter merely referred to as "RE layer or R layer").

Further, at least another one layer is a second information recording layer (hereinafter merely referred to as "ROM layer").

That is, the optical information recording medium is a so-called hybrid optical information recording medium in which information recording layers with different recording properties, such as ROM, RE, and R layers, are layered.

The wording "information is only additionally recordable" indicates that information is readable but information is only additionally recordable.

Further, with the arrangement, the RE layer or the R layer includes an identification information recording region where identification information indicative of the structure of the optical information recording medium is recorded in advance.

It is necessary for the optical information recording and reproducing device of the present invention (which will be explained below) to specify how many information recording layers the optical information recording medium consists of and what recording property each information recording layer has. The "identification information" is information indicative of such a structure of the optical information recording medium.

Further, with the arrangement, interlayer-movement permission information indicative of permission for the light spot of the reproducing light to make interlayer-movement from the identification information recording region of the RE layer or R layer to the ROM layer is recorded on the identification information recording region.

As for the "interlayer-movement permission information indicative of permission for the light spot of the reproducing light to make interlayer-movement", interlayer-movement may be made immediately after recognizing the interlayer-movement permission information, or interlayer-movement may be made not immediately after recognizing the interlayer-movement permission information. That is, the interlayer-movement permission information is information for enabling the optical information recording and reproducing device to recognize that the interlayer-movement is permitted or not permitted, and the interlayer-movement may be made at any time point as long as the time point is between recognition of the interlayer-movement permission information and completion of reading all information recorded on the identification information recording region.

A recording position of the "interlayer-movement permission information" is not particularly limited as long as the recording position is between an information recording start position and an information recording end position of the identification information recording region. In a case where the "interlayer-movement permission information" is recorded at the information recording end position of the identification information recording region, interlayer-movement is made after all the information recorded on the identification information recording region is read and right after the interlayer-movement permission information is recognized.

Therefore, by designing the optical information recording and reproducing device such that, for example, recognition of interlayer-movement permission information while reading the identification information recorded in advance on the identification information recording region of the RE layer or R layer urges the optical information recording and reproducing device to make the interlayer-movement of a light spot in a predetermined manner at a time when the structure of the optical information recording medium of the present invention is specified based on reading of the identification information, it is possible for the optical information recording and reproducing device to move the light spot to the ROM layer without moving the light spot in the same RE layer or R layer after acquiring the identification information and specifying the structure of the optical information recording medium, thereby reading information recorded on the ROM layer (e.g. program such as software).

This enables shortening a time from acquiring identification information to starting a program etc. recorded on the ROM layer.

Further, the optical information recording and reproducing device of the present invention is an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, the optical information recording and reproducing device comprising: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the identification information recording region of the first information recording layer to the second information recording layer; and reproduction control means for reproducing information recorded in advance on the second information recording layer.

Further, the method of the present invention for controlling an optical information recording and reproducing device is a method for controlling an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, the method comprising the steps of: (i) reproducing the identification information from the identification information recording region; (ii) when a structure of the optical information recording medium is specified based on the identification information reproduced in the step (i), causing a light spot of the reproducing light to make interlayer-movement from the identification information recording region of the first information recording layer to the second information recording layer; and (iii) reproducing information recorded in advance on the second information recording layer.

The optical information recording and reproducing device as above and the method as above include the identification information reproduction control means for reproducing the identification information from the identification information recording region and the step (i) of reproducing the identification information from the identification information recording region, respectively. This enables acquiring identification information, enabling to specify the structure of the optical information recording medium.

Further, the optical information recording and reproducing device as above and the method as above include the interlayer-movement control means for, when a structure of the optical information recording medium is specified based on the identification information reproduced by the identification information reproduction control means, causing the light spot of the reproducing light to make interlayer-movement and the step (ii) of, when a structure of the optical information recording medium is specified based on the identification information reproduced in the step (i), causing the light spot of the reproducing light to make interlayer-movement, respectively.

This enables causing the light spot to make interlayer-movement when the structure of the optical information recording medium is specified based on the identification information.

Further, the optical information recording and reproducing device as above and the method as above include the reproduction control means for reproducing information recorded in advance on the ROM layer and the step (iii) of reproducing information recorded in advance on the ROM layer, respectively.

Accordingly, at a time when the structure of the optical information recording medium of the present invention is specified by reading the identification information recorded in advance on the identification information recording region of the RE layer or R layer, it is possible to make the interlayer-movement in a predetermined manner and to reproduce information recorded in advance on the ROM layer. Consequently, it is possible to move the light spot to the ROM layer without moving the light spot in the same RE layer or R layer after acquiring the identification information and specifying the structure of the optical information recording medium, thereby reading information recorded on the ROM layer (e.g. program such as software).

This enables shortening a time from acquiring identification information to starting a program etc. recorded on the ROM layer.

In addition to the above arrangement, the optical information recording and reproducing device may be arranged such that interlayer-movement permission information indicative of permission for the light spot of the reproducing light to make interlayer-movement is recorded on the identification information recording region, the identification information reproduction control means reproduces the interlayer-movement permission information from the identification information recording region, and when the identification information reproduction control means reproduces the interlayer-movement permission information, the interlayer-movement control means causes the light spot of the reproducing light to make interlayer-movement.

This enables shortening a time for acquiring identification information to starting a program etc. recorded on an ROM layer, using the optical information recording medium having the interlayer-movement permission information.

Further, in addition to the above arrangement, the optical information recording and reproducing device of the present invention may be arranged so as to further include recording control means for causing interlayer-movement permission information indicative of permission for the light spot of the reproducing light to make interlayer-movement to be recorded on the identification information recording region, the identification information reproduction control means reproducing the interlayer-movement permission information from the identification information recording region, and when the identification information reproduction control means reproduces the interlayer-movement permission information, the interlayer-movement control means causing the light spot of the reproducing light to make interlayer-movement.

The optical information recording and reproducing device with the arrangement can change an optical information recording medium without the interlayer-movement permission information in its identification information recording region into an optical information recording medium with the interlayer-movement permission information in its identification information recording region. Use of the optical information recording medium thus prepared enables shortening a time from acquiring identification information to starting a program etc. recorded on an ROM layer.

In addition to the above arrangement, the optical information recording medium of the present invention, the optical information recording and reproducing device of the present invention, and the method of the present invention for controlling the optical information recording and reproducing device may be arranged such that the interlayer-movement of the light spot of the reproducing light is made from the identification information recording region of the first information recording layer to a portion of the second information recording layer which portion is close to an internal periphery of the optical information recording medium.

With the arrangement, on the premise that the identification information on the RE layer or the R layer is positioned at an internal periphery of the optical information recording region, it is possible shorten a distance required for the light spot to reproduce the identification information recorded on the identification information management region and specify the structure of the optical information recording medium and then move to a region of the ROM layer where information is recorded in advance. This enables shortening a time from acquiring identification information to starting a program etc. recorded on an ROM layer.

In addition to the above arrangement, the optical information recording medium of the present invention, the optical information recording and reproducing device of the present invention, and the method of the present invention for controlling the optical information recording and reproducing device may be arranged such that the interlayer-movement of the light spot of the reproducing light is made from the identification information recording region of the first information recording layer to a portion of the second information recording layer which portion is close to an external periphery of the optical information recording medium.

With the arrangement, on the premise that the identification information on the RE layer or R layer is positioned at an internal periphery of the optical information recording medium, the light spot is moved from the identification information recording region of the RE layer or R layer where the identification information is recorded to a region of the ROM layer where information is recorded in advance, and then the light spot starts from the external periphery to the internal periphery.

Consequently, when information recorded in advance on the ROM layer is reproduced and then the light spot accesses the RE layer or R layer starting from the internal periphery, a distance by which the light spot travels is short. This enables promptly starting a recording operation.

In addition to the above arrangement, It is preferable to arrange the optical information recording medium of the present invention, the optical information recording and reproducing device of the present invention, and the method of the present invention for controlling the optical information recording and reproducing device such that the interlayer-movement of the light spot of the reproducing light is made by a shortest distance from the identification information recording region of the first information recording layer to the second information recording layer.

With the arrangement, it is possible to shorten a time from acquiring identification information to starting a program etc. recorded on an ROM layer.

In a case where individual information recording layers are positioned to be parallel to each other along an in-plane direction of a plane where reproducing light is incident, an example of the "shortest distance" is a distance between a point on the information recording region of the RE layer or R layer which point is a starting point of the light spot in interlayer-movement and an intersection point of a line extending from the point in a direction normal to a plane where reproducing light is incident and an information recording plane of the ROM layer.

In a case where there are two or more ROM layers, an example of the "shortest distance" is a distance between the aforementioned point on the information recording region of the RE layer or R layer and a closer one of intersection points of the aforementioned line and information recording planes of the two or more ROM layers.

In addition to the above arrangement, it is preferable to arrange the optical information recording medium of the present invention, the optical information recording and reproducing device of the present invention, and the method of the present invention for controlling the optical information recording and reproducing device such that the interlayer-movement of the light spot of the reproducing light is made before information is recorded on the first information recording layer.

With the arrangement, information recorded in advance on the ROM layer is reproduced before information is recorded on the RE layer or R layer (by the recording control means). This enables shortening a time from acquiring identification information to starting a program etc. recorded on the ROM layer.

In addition to the above arrangement, it is preferable to arrange the optical information recording medium of the present invention, the optical information recording and reproducing device of the present invention, and the method of the present invention for controlling the optical information recording and reproducing device such that the first information recording layer includes a management information recording region where management information for managing recordation and reproduction of information in the optical information recording medium is recorded in advance, and the interlayer-movement of the light spot of the reproducing light is made before the management information recorded on the management information recording region is reproduced.

With the arrangement, information recorded in advance on the ROM layer is reproduced before the management information is reproduced. Accordingly, it is possible to shorten a time from acquiring identification information to starting a program etc. recorded on an ROM layer, compared with a case of reproducing the management information after acquiring the identification information.

An optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance, and the first information recording layer and the second information recording layer being designed such that reading the identification information by emitting the reproducing light enables a light spot of the reproducing light to make interlayer-movement from the first information recording layer to the second information recording layer.

With the arrangement, when the identification information is recorded in advance on the identification information recording region of the first information recording layer, it is recognized that interlayer-movement of the light spot of the reproducing light from the identification information recording region of the first information recording layer to the second information recording layer is permitted.

Consequently, the optical information recording and reproducing device can make the interlayer-movement in a predetermined manner at a time when the structure of the optical information recording medium is specified while reading the identification information recorded in advance on the identification information recording region of the first information recording layer. Therefore, it is possible for the optical information recording and reproducing device to move the light spot to the second information recording layer without moving the light spot in the same first information recording layer after acquiring the identification information and specifying the structure of the optical information recording medium, thereby reading information recorded on the second information recording layer (e.g. program such as software).

This enables shortening a time from acquiring identification information to starting a program etc. recorded on the second information recording layer.

It is preferable to arrange the optical information recording medium of the present invention such that the second information recording layer includes a management information recording region where management information for managing reproduction of information from the second information recording layer is recorded in advance, and the identification information recording region and the management information recording region are positioned to be close to each other along a radial direction of the optical information recording medium.

With the arrangement, interlayer-movement of the light spot of the reproducing light from the identification information recording region of the first information recording layer to the management information reproducing region of the second information recording layer is made by the shortest distance.

This enables reproducing the management information right after acquiring the identification information. Accordingly, it is possible to shorten a time from acquiring the identification information to starting a program etc. recorded on the second information recording layer, compared with a case of reproducing management information recorded on the management information recording region of the first information recording layer.

An optical information recording medium of the present invention includes two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, the first information recording layer including an identification information recording region where identification information indicative of a structure of the optical information recording medium is recorded in advance and a management information recording region where management information for managing recordation of information on and/or reproduction of information from the first information recording layer is recorded in advance, and interlayer-movement permission information indicative of permission for a light spot of the reproducing light to make interlayer-movement from the identification information recording region of the first information recording layer to the second information recording layer being further recorded on the management information recording region.

With the arrangement, the interlayer-movement permission information is recorded on the management information recording region in order that interlayer-movement of the light spot of the reproducing light is made from the identification information recording region of the first information recording layer to the second information recording layer before a user starts recordation of information on the first information recording layer.

Consequently, with the arrangement, information recorded in advance on the second information recording layer is reproduced before a user records information on the first information recording layer. This enables shortening a time from acquiring identification information to starting a program etc. recorded on the second information recording layer.

It is preferable to arrange the optical information recording medium of the present invention such that the first information recording layer further includes a user recording region on which a user is capable of recording desired information, and the user recording region is positioned to be close to the management information recording region in a radial direction of the optical information recording medium.

It is preferable to arrange the optical information recording medium of the present invention such that the management information recording region is positioned to be inwardly from the user recording region along a radial direction of the optical information recording medium.

With the arrangement, in an optical disc in which information on an RE layer or R layer serving as the first information recording layer is reproduced from the internal periphery to the external periphery, the management information recording region of the RE layer or the R layer is positioned to be inwardly from the user recording region. Consequently, information on the management information recording region is reproduced before information is recorded on the user recording region of the RE layer or R layer, and then interlayer-movement of the light spot is made and information recorded in advance on the ROM layer serving as the second information recording layer is reproduced. Accordingly, it is possible to shorten a time from acquiring the interlayer-movement permission information to starting a program etc. recorded on the ROM layer, compared with a case of recording information on the RE layer or R layer after acquiring the interlayer-movement permission information.

An optical information recording and reproducing device of the present invention is an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the optical information recording and reproducing device including: identification information reproduction control means for reproducing the identification information from the identification information recording region; interlayer-movement control means for, when a structure of the optical information recording medium is specified based on the identification information reproduced by the identification information reproduction control means, causing a light spot of the reproducing light to make interlayer-movement from the management information recording region of the first information recording layer to the second information recording layer; and reproduction control means for reproducing information recorded in advance on the second information recording layer.

A method of the present invention for controlling an optical information recording and reproducing device is a method for controlling an optical information recording and reproducing device for recording information on and/or reproducing information from an optical information recording medium, the optical information recording medium including two or more information recording layers, from each of which information is readable by emitting reproducing light thereto, at least one of said two or more information recording layers being a first information recording layer where information is rewritable or information is only additionally recordable, at least another one of said two or more information recording layers being a second information recording layer where information is only readable, and the first information recording layer including an identification information recording region where identification information indicative of a structure of the optical information recording medium is recorded in advance and a management information recording region where management information for managing recordation of information on and/or reproduction of information from the first information recording layer is recorded, the method including the steps of: (i) reproducing the identification information from the identification information recording region; (ii) when a structure of the optical information recording medium is specified based on the identification information reproduced in the step (i), causing a light spot of the reproducing light to make interlayer-movement from the management information recording region of the first information recording layer to the second information recording layer; and (iii) reproducing information recorded in advance on the second information recording layer.

With the optical information recording and reproducing device as above and the method as above, at a time when management information recorded in advance on the management information recording region of the first information recording layer of the optical information recording medium is read and management information for managing recordation and reproduction of information on and from the optical is acquired, the interlayer-movement is made in a predetermined manner so that information recorded in advance on the second information recording layer is reproduced. This enables moving the light spot to the second information recording layer and reading information (e.g. program such as software) recorded on the second information recording layer, before a user starts recordation of information on the first information recording layer.

This enables shortening a time from acquiring identification information to starting a program etc. recorded on the second information recording layer.

It is preferable that the first information recording layer further includes a user recording region in which a user can record desired information, and the interlayer-movement of the light spot of the reproducing light is made before information is recorded on the user recording region.

With the arrangement, information recorded in advance on the ROM layer serving as the second information recording layer is reproduced before information is recorded on the RE layer or R layer serving as the first information recording layer. Accordingly, it is possible to shorten a time from acquiring the identification information and the management information to starting a program etc. recorded on the ROM layer, compared with a case of recording information on the RE layer or R layer after acquiring the identification information and the management information.

Individual means, individual functions, individual steps, and individual processes of the optical information recording and reproducing device and the method for controlling the optical information recording and reproducing device may be realized by a computer. In this case, the present invention encompasses: an optical information recording and reproducing program which causes a computer to function as individual means, to realize individual functions, or to carry out individual steps and individual processes so as to realize the optical information recording and reproducing device and the method for controlling the optical information recording and reproducing device; and a computer-readable storage medium in which the optical information recording and reproducing program is stored.

### Industrial Applicability

The present invention is widely applicable to an optical information recording medium having a multilayered structure in which an ROM layer, an RE layer, and an R layer coexist, and to an optical information recording and reproducing device for recording information on and reproducing information from the optical information recording medium.

### Reference Signs List

1. Optical disc device (optical information recording and reproducing device)
2, 2A-2E. Optical disc (optical information recording medium)
3. Storage section
4, 4D, 4E. RE/R layer (first information recording layer)
5, 5A, 5B, 5D, 5E. ROM layer (second information recording layer)
6. Disc loading recognition section
7. Operation section
10. Recording and reproducing circuits
11. Optical head
12. Optical pickup
13. Pickup drive circuit
14. Laser drive circuit
15. Reproduction circuit
20. Control section
21. Disc management section
22. Reproduction control section (reproduction control means, identification information reproduction control means, interlayer-movement control means)
23. Pickup control section
24. Laser control section
25. Software program management section
26. Recording control section (recording control means)
31. Identification information reproduced data storage section
32. ROM reproduced data storage section
33. Software program storage section
41, 41D, 41E. Identification information recording region
42. Management information recording region
43, 43D. User recording region
51 D, 51 E. Management information recording region
221. Identification information reproduction instruction section (identification information reproduction control means)
222. Interlayer-jump instruction section (interlayer-movement control means)
223. Reproduced data process section
SP. Interlayer-jump start position
EP. Interlayer-jump end position
Interlayer-movement Flag (interlayer-movement permission information)

## Claims

1. An optical information recording medium, comprising two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable,
the first information recording layer including an identification information recording region where identification information indicative of a structure of the optical information recording medium is recorded in advance, and
interlayer-movement permission information indicative of permission for a light spot of the reproducing light to make interlayer-movement from the identification information recording region of the first information recording layer to the second information recording layer being recorded on the identification information recording region.

2. The optical information recording medium as set forth in claim 1, wherein the interlayer-movement of the light spot of the reproducing light is made from the identification information recording region of the first information recording layer to a portion of the second information recording layer which portion is close to an internal periphery of the optical information recording medium.

3. The optical information recording medium as set forth in claim 1, wherein the interlayer-movement of the light spot of the reproducing light is made from the identification information recording region of the first information recording layer to a portion of the second information recording layer which portion is close to an external periphery of the optical information recording medium.

4. The optical information recording medium as set forth in claim 1, wherein the interlayer-movement of the light spot of the reproducing light is made by a shortest distance from the identification information recording region of the first information recording layer to the second information recording layer.

5. The optical information recording medium as set forth in any one of claims 1-4, wherein the interlayer-movement of the light spot of the reproducing light is made before information is recorded on the first information recording layer.

6. The optical information recording medium as set forth in any one of claims 1-5, wherein
the first information recording layer includes a management information recording region where management information for managing recordation and reproduction of information in the optical information recording medium is recorded in advance, and
the interlayer-movement of the light spot of the reproducing light is made before the management information recorded on the management information recording region is reproduced.

7. An optical information recording and reproducing device for recording information on and/or reproducing information from an optical information recording medium,
the optical information recording medium including two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable,
the first information recording layer including an identification information recording region where identification information indicative of a structure of the optical information recording medium is recorded in advance,
the optical information recording and reproducing device comprising:
identification information reproduction control means for reproducing the identification information from the identification information recording region;
interlayer-movement control means for, when a structure of the optical information recording medium is specified based on the identification information reproduced by the identification information reproduction control means, causing a light spot of the reproducing light to make interlayer-movement from the identification information recording region of the first information recording layer to the second information recording layer; and
reproduction control means for reproducing information recorded in advance on the second information recording layer.

8. The optical information recording and reproducing device as set forth in claim 7, wherein
interlayer-movement permission information indicative of permission for the light spot of the reproducing light to make interlayer-movement is recorded on the identification information recording region,
the identification information reproduction control means reproduces the interlayer-movement permission information from the identification information recording region, and
when the identification information reproduction control means reproduces the interlayer-movement permission information, the interlayer-movement control means causes the light spot of the reproducing light to make interlayer-movement.

9. The optical information recording and reproducing device as set forth in claim 7, further comprising recording control means for causing interlayer-movement permission information indicative of permission for the light spot of the reproducing light to make interlayer-movement to be recorded on the identification information recording region,
the identification information reproduction control means reproducing the interlayer-movement permission information from the identification information recording region, and
when the identification information reproduction control means reproduces the interlayer-movement permission information, the interlayer-movement control means causing the light spot of the reproducing light to make interlayer-movement.

10. The optical information recording and reproducing device as set forth in any one of claims 7-9, wherein the interlayer-movement of the light spot of the reproducing light is made from the first information recording layer to a portion of the second information recording layer which portion is close to an internal periphery of the optical information recording medium.

11. The optical information recording and reproducing device as set forth in any one of claims 7-9, wherein the interlayer-movement of the light spot of the reproducing light is made from the first information recording layer to a portion of the second information recording layer which portion is close to an external periphery of the optical information recording medium.

12. The optical information recording and reproducing device as set forth in any one of claims 7-9, wherein the interlayer-movement of the light spot of the reproducing light is made by a shortest distance from the first information recording layer to the second information recording layer.

13. The optical information recording and reproducing device as set forth in any one of claims 7-12, wherein the interlayer-movement of the light spot of the reproducing light is made before information is recorded on the first information recording layer.

14. The optical information recording and reproducing device as set forth in any one of claims 7-13, wherein
the first information recording layer includes a management information recording region where management information for managing recordation and reproduction of information in the optical information recording medium is recorded in advance, and
the interlayer-movement of the light spot of the reproducing light is made before the management information recorded on the management information recording region is reproduced.

15. A method for controlling an optical information recording and reproducing device for recording information on and/or reproducing information from an optical information recording medium,
the optical information recording medium including two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable,
the first information recording layer including an identification information recording region where identification information indicative of a structure of the optical information recording medium is recorded in advance,
the method comprising the steps of:
(i) reproducing the identification information from the identification information recording region;
(ii) when a structure of the optical information recording medium is specified based on the identification information reproduced in the step (i), causing a light spot of the reproducing light to make interlayer-movement from the identification information recording region of the first information recording layer to the second information recording layer; and
(iii) reproducing information recorded in advance on the second information recording layer.

16. An optical information recording medium, comprising two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable,
the first information recording layer including an identification information recording region where identification information indicative of a structure of the optical information recording medium is recorded in advance, and
the first information recording layer and the second information recording layer being designed such that reading the identification information by emitting the reproducing light enables a light spot of the reproducing light to make interlayer-movement from the first information recording layer to the second information recording layer.

17. The optical information recording medium as set forth in claim 16, wherein
the second information recording layer includes a management information recording region where management information for managing reproduction of information from the second information recording layer is recorded in advance, and
the identification information recording region and the management information recording region are positioned to be close to each other along a radial direction of the optical information recording medium.

18. An optical information recording medium, comprising two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable,
the first information recording layer including an identification information recording region where identification information indicative of a structure of the optical information recording medium is recorded in advance and a management information recording region where management information for managing recordation of information on and/or reproduction of information from the first information recording layer is recorded in advance, and
interlayer-movement permission information indicative of permission for a light spot of the reproducing light to make interlayer-movement from the management information recording region of the first information recording layer to the second information recording layer being further recorded on the management information recording region.

19. The optical information recording medium as set forth in claim 18, wherein
the first information recording layer further includes a user recording region on which a user is capable of recording desired information, and
the management information recording region is positioned to be inwardly from the user recording region along a radial direction of the optical information recording medium.

20. An optical information recording and reproducing device for recording information on and/or reproducing information from an optical information recording medium,
the optical information recording medium including two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable, and
the first information recording layer including an identification information recording region where identification information indicative of a structure of the optical information recording medium is recorded in advance and a management information recording region where management information for managing recordation of information on and/or reproduction of information from the first information recording layer is recorded,
the optical information recording and reproducing device comprising:
identification information reproduction control means for reproducing the identification information from the identification information recording region;
interlayer-movement control means for, when a structure of the optical information recording medium is specified based on the identification information reproduced by the identification information reproduction control means, causing a light spot of the reproducing light to make interlayer-movement from the management information recording region of the first information recording layer to the second information recording layer; and
reproduction control means for reproducing information recorded in advance on the second information recording layer.

21. The optical information recording and reproducing device as set forth in claim 20, wherein
the first information recording layer further includes a user recording region on which a user is capable of recording desired information, and
the interlayer-movement of the light spot of the reproducing light is made before information is recorded on the user recording region.

22. A method for controlling an optical information recording and reproducing device for recording information on and/or reproducing information from an optical information recording medium,
the optical information recording medium including two or more information recording layers, from each of which information is readable by emitting reproducing light thereto,
at least one of said two or more information recording layers being a first information recording layer where information is rewritable or information is only additionally recordable,
at least another one of said two or more information recording layers being a second information recording layer where information is only readable, and
the first information recording layer including an identification information recording region where identification information indicative of a structure of the optical information recording medium is recorded in advance and a management information recording region where management information for managing recordation of information on and/or reproduction of information from the first information recording layer is recorded,
the method comprising the steps of:
(i) reproducing the identification information from the identification information recording region;
(ii) when a structure of the optical information recording medium is specified based on the identification information reproduced in the step (i), causing a light spot of the reproducing light to make interlayer-movement from the management information recording region of the first information recording layer to the second information recording layer; and
(iii) reproducing information recorded in advance on the second information recording layer.

23. An optical information recording and reproducing program for causing a computer to function as individual means of an optical information recording and reproducing device as set forth in any one of claims 7-14, 20 and 21.

24. A computer-readable storage medium, in which an optical information recording and reproducing program as set forth in claim 23 is stored.
